(19)

**Europäisches Patentamt**
**European Patent Office**
**Office européen des brevets**

(11) **EP 4 377 642 B1**

(12) **EUROPEAN PATENT SPECIFICATION**

(45) Date of publication and mention
of the grant of the patent:
**01.04.2026  Bulletin 2026/14**

(21) Application number: **22760784.3**

(22) Date of filing: **29.07.2022**

(51) International Patent Classification (IPC):
**G01F 15/00** *(2006.01)*   **G01V 1/00** *(2024.01)*
**G01V 1/28** *(2006.01)*   **G08B 21/10** *(2006.01)*
**G01H 1/00** *(2006.01)*   **G01P 15/00** *(2006.01)*
**F16K 17/36** *(2006.01)*   **G01F 3/22** *(2006.01)*
**F16K 37/00** *(2006.01)*   **G01P 15/08** *(2006.01)*
**G01P 15/18** *(2013.01)*   **G01V 1/01** *(2024.01)*
**G01V 1/18** *(2006.01)*

(52) Cooperative Patent Classification (CPC):
**G01F 15/00; F16K 17/36; F16K 37/0041;
F16K 37/005; G01F 15/005; G01H 1/00;
G01P 15/0891; G01P 15/18; G01V 1/01;
G01V 1/181; G08B 21/10;** G01F 3/22

(86) International application number:
**PCT/IB2022/057046**

(87) International publication number:
**WO 2023/007447 (02.02.2023 Gazette 2023/05)**

(54) **AN IMPROVED METHOD FOR EVALUATING A VIBRATIONAL EVENT**

VERBESSERTES VERFAHREN ZUR BEURTEILUNG EINES SCHWINGUNGSEREIGNISSES

PROCÉDÉ AMÉLIORÉ D'ÉVALUATION D'UN ÉVÉNEMENT VIBRATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2021  IT 202100020561
30.07.2021  IT 202100020567
30.07.2021  IT 202100020588**

(43) Date of publication of application:
**05.06.2024  Bulletin 2024/23**

(73) Proprietor: **Pietro Fiorentini S.p.A.
36057 Arcugnano (VI) (IT)**

(72) Inventors:
• **BELLERI, Andrea
24044 Dalmine (BG) (IT)**

• **BOSIO, Marco
24044 Dalmine (BG) (IT)**
• **GUZZETTI, Sergio
20088 Rosate (MI) (IT)**
• **MEMÈ, Lorenzo
20088 Rosate (MI) (IT)**

(74) Representative: **Braidotti, Andrea
Praxi Intellectual Property S.p.A.
Via F. Baracca, 5/A
30173 Venezia (IT)**

(56) References cited:
**JP-A- 2000 162 032    JP-A- 2009 175 130
JP-A- 2020 091 167    US-A1- 2010 042 328
US-A1- 2015 219 777    US-A1- 2021 141 107
US-B1- 6 661 346**

**Description**

FIELD OF THE TECHNIQUE

The present invention relates to a method, implemented by means of a processor/controller/computer, for the evaluation of a vibrational event, in particular of a vibrational event caused by a seismic phenomenon. The present disclosure also relates to a device for detecting a seismic event. The present disclosure also relates to an apparatus for measuring a fluid which is configured for detecting a seismic event. According to an aspect not encompassed by the wording of the claims, the device or apparatus, in particular for measuring a fluid, is configured to identify and/or detect a seismic event of a predetermined entity, preferably in order to then promptly carry out a corresponding action, in particular to control the closure of a valve, to thus prevent the passage of the fluid through and/or out of the apparatus connected to the device or from the apparatus itself. In particular, the apparatus is suitable for being mounted in correspondence with a passage of a fluid, in particular of gas or water or oil or other liquids or fluids, even multiphase, in general, and is configured to be crossed from said fluid. Preferably, said apparatus is configured to carry out a measurement, preferably of flow rate or flow, of the fluid that passes through it. Preferably, said apparatus is a gas meter.

The present disclosure also relates to a method, implemented by means of a processor/controller/computer, for verifying the installation characteristics of a device or apparatus, which is not encompassed by the wording of the claims but is considered as useful for understanding the invention. According to an aspect not encompassed by the wording of the claims, the device or apparatus, in particular of the type envisaged for measuring a fluid, is configured to verify the correctness of its installation, preferably to verify the rigidity of its installation and/or to identify the natural installation frequency (i.e. the minimum frequency or self-frequency) on the three axes perpendicular to each other, in particular in order to evaluate the compatibility with the requirements of the sector regulations on the subject of seismic behavior. The device or apparatus for measuring a fluid is also configured to perform an auto-calibration operation. The device or apparatus for measuring a fluid is also configured to carry out a self-evaluation operation to verify its correct installation and/or any inclinations subsequent to installation.

The present disclosure also relates to a method, implemented by means of a processor/controller/computer, for controlling the operating modes of at least one accelerometer, which is not encompassed by the wording of the claims but is considered as useful for understanding the invention. The present disclosure also relates to a device comprising an accelerometer whose operating modes are controlled according to said method. The present disclosure also relates to an apparatus for measuring a fluid which comprises an accelerometer whose operating modes are controlled according to said method.

STATE OF THE TECHNIQUE

Currently, in the context of the lines or apparatuss that are crossed by gas, the sector regulations - such as the American ASCE standard or other regulations developed or under development in various countries - identify the areas of application, as well as the frequencies and intensity of the vibrations deriving from the seismic event that must lead or not to the interruption of the gas flow.

Electromechanical systems are known which are able to cause the interruption of the gas flow, thus satisfying the minimum requirements envisaged by the regulations, however these devices do not allow the detection of other information whose availability would make the methodology for evaluating the vibrations suffered much more robust. and efficient.

The use of an electronic system makes it possible to detect and acquire a digital signal associated with the earthquake and with greater repeatability of the response compared to a mechanical system.

Electromechanical devices are also already known, such as the sensors called "roll-ball", which include a metal sphere which, when subjected to an oscillation, opens and closes an electric circuit which thus returns a square wave relative to the voltage power supply of the instrument itself, ie an on/off signal is returned. Although these devices have the advantage of having practically zero consumption in static conditions, they return signals of little significance, where in particular the extractable information is relative to the square wave alone without being able to quantify with certainty the intensity, frequencies and direction of the stress. Furthermore, even the performances in terms of sensitivity and precision are not optimal as they do not typically allow to distinguish stresses characterized by high forcing frequencies, for example higher than 5Hz, thus resulting not in compliance with the requirements of the standard.

US6661346 describes an earthquake detector with three accelerometers oriented respectively in three directions x, y and z orthogonal to each other. The output signals from each of the three accelerometers are then filtered by means of a respective band-pass filter to thus obtain voltage signals which are then compared with a corresponding threshold voltage V1; if the voltage values of the filtered signals exceed the threshold voltage V1, then an earthquake identification signal is generated.

JP2000162032 describes a solution to detect the degree of vibration using an accelerometer in which, when the accelerometer output exceeds a threshold value, the number of times - within a predefined time interval - is measured that the accelerometer output exceeds the threshold value.

US2015/219777 discloses a device for detecting earthquakes provided with two accelerometers having different sensitivities. The device comprises a converter for digitizing the analog signals of the accelerometers and a processor for comparing the acceleration signals with threshold values which can vary according to the frequency intervals used for the detection of the acceleration signals.

JP2020091167 describes a seismic sensor with an accelerometer which detects acceleration on three axes and in which the measured acceleration is divided into a plurality of time intervals and, in each time interval, a corresponding characteristic quantity is calculated.

JP2009175130 discloses a real-time seismic intensity meter comprising means for detecting acceleration in three directions, an A/D converter, a digital filter for narrowing the band on the input signals and extracting specific signal components at certain frequencies, an apparatus configured to perform the vector sum of the acceleration signals in the three directions, and a unit for calculating the seismic intensity on the basis of the vector sum performed by said apparatus.

US2021141107 discloses a seismic sensor with an earthquake determination unit configured to determine an occurrence of an earthquake based on the presence or absence of a pulse waveform in a waveform of acceleration measured in a determination period, and/or a frequency characteristic or a convergence characteristic after the pulse waveform in a waveform of the acceleration.

US2010042328 discloses a device capable of distinguishing between seismic movements due to an earthquake or an explosion; the device uses accelerometers and a microcontroller for the detection and signal analysis of the seismic movements.

OBJECTIVES OF THE INVENTION

The object of the present invention is to propose a method implemented by means of an electronic processor/controller, which allows to overcome, at least in part, the drawbacks of traditional solutions.

Another object of the present invention is to propose a method that satisfies the requirements envisaged in the regulations relating to gas safety in the event of seismic events, such as for example the ACSE regulations or other similar or derivative regulations.

Another object of the present invention is to propose a method which allows a seismic event to be identified and signaled in a precise and repeatable manner, in order to be able to control the closure of the gas flow or the passage of other fluid.

Another object of the present invention is to propose a method which allows a seismic event to be recognized and signaled in a precise and repeatable manner and, at the same time, allows the characteristics of the event to be measured.

Another object of the present invention is to propose a method for identifying a seismic event which is highly robust and reliable.

Another object of the present invention is to propose a method for identifying a seismic event that uses commercially available hardware components.

Another purpose of the present invention is to propose a method that can be implemented inside a controller/processor of an apparatus used to measure the fluid that passes through it, such as for example a gas meter that is configured to measure the flow./flow rate of the gas that passes through it, and therefore the consumption of gas by a user.

Another object of the present invention is to propose a method which is able to distinguish/discriminate in a precise and repeatable way the vibrations deriving from a seismic event from those deriving from other environmental factors or disturbances.

Another object of the present invention is to propose a method which can be implemented completely on board an apparatus for measuring at least one quantity of the fluid that passes through it and which also allows to verify its correct installation.

Another object of the invention is to propose a method that can be used for on-field monitoring and diagnostics.

Another object of the invention is to propose a method which can be implemented in a simple, rapid and low cost manner.

Another object of the invention is to propose a method which is an improvement and/or alternative with respect to any other traditional solutions.

Another object of the invention is to propose a method which has an alternative characterization with respect to traditional solutions.

Another object of the invention is to propose a method which can be implemented and used in apparatuses already currently available.

Another object of the present invention is to propose a device that is able to identify in a precise, reliable and repeatable way a given vibrational event, in particular caused by a seismic phenomenon, preferably to promptly control the interruption of the fluid flow in input and/or output from an external device to said device and connected to the latter.

Another object of the invention is to propose a device which can be implemented in a simple, rapid and low-cost manner.

Another object of the invention is to propose a device which is an improvement and/or alternative with respect to any other traditional solutions.

Another object of the invention is to propose a device which has an alternative characterization with respect to traditional solutions.

Another object of the present invention is to propose an apparatus for measuring at least one quantity of the fluid that passes through it, preferably for measuring the flow rate and/or flow of said fluid, which is capable of identifying in a precise, reliable manner a vibrational event, in particular caused by a seismic phenomenon, can be repeated in order to promptly control the interruption of the flow of fluid entering and/or exiting said apparatus.

Another object of the present invention is to propose an apparatus which also provides additional information relating to the characteristics of the vibrational event, whether this is caused by a seismic phenomenon or caused by other environmental factors or disturbances.

Another object of the invention is to propose an apparatus, in particular a gas meter, in which a seismic event is identified in a precise, reliable and repeatable way.

Another object of the invention is to propose an apparatus for measuring a fluid which can be implemented in a simple, rapid and low-cost manner.

Another object of the invention is to propose an apparatus for measuring a fluid which is an improvement and/or alternative to any other traditional solutions.

Another object of the invention is to propose an apparatus for measuring a fluid which has an alternative characterization with respect to traditional solutions.

All these objects, either alone or in any combination thereof, and others which will result from the following description, are achieved, according to the invention, with a method as defined in claim 1 and/or in the other claims.

DESCRIPTION OF THE FIGURES

The present invention is further clarified hereinafter in some of its preferred embodiments reported for purely illustrative and non-limiting purposes with reference to the attached tables of drawings, in which:

Figure 1    shows a schematic view of a device according to the disclosure,

Figure 2    shows a front view of an apparatus according to the disclosure,

Figure 3    shows a schematic view of the components of the apparatus of fig. 2,

Figure 4    schematically shows a different embodiment of the components of the apparatus of fig. 2,

Figure 5    shows a graph of the analysis in pseudo-frequency for the X axis only provided in the method according to the invention,

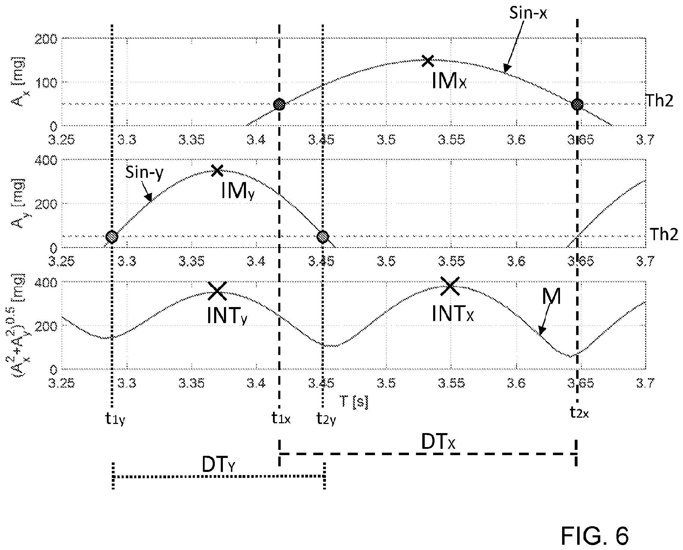

Figure 6    shows the trends, vertically aligned with each other along the same temporal axis, of the signal along the X axis, along the Y axis and of the instantaneous modulus M,

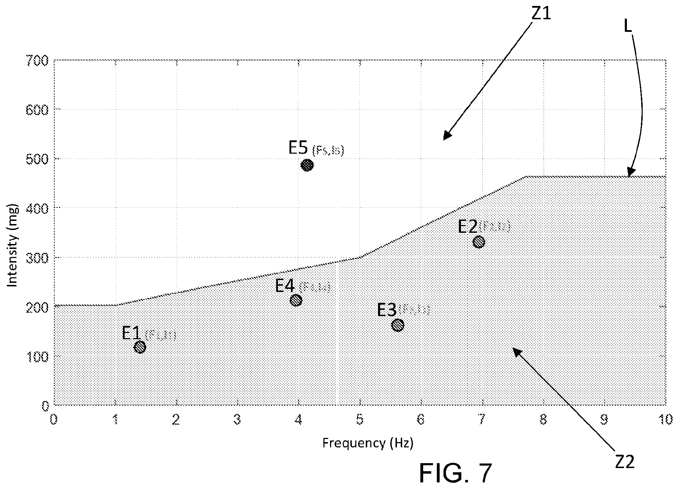

Figure 7    shows a frequency - intensity graph for vibrational events and this in order to discriminate whether or not an event has a potentially risky and/or dangerous intensity and frequency,

Figure 8a    shows an example of a suitable response in the frequency domain,

Figure 8b    shows an example of an unsuitable response in the frequency domain, and

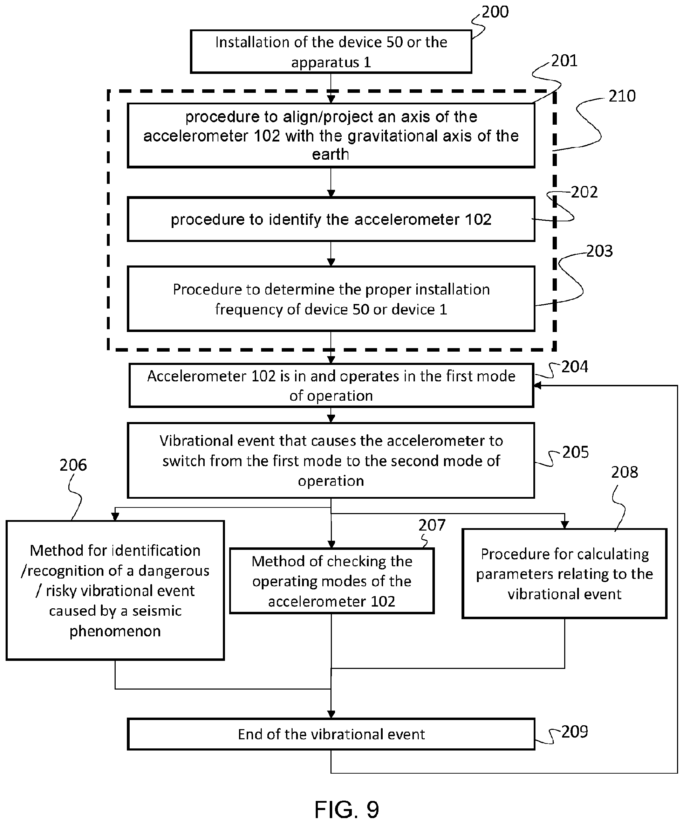

Figure 9    shows a diagram of the implementation sequence of the methods and procedures according to the invention.

DETAILED DESCRIPTION OF THE INVENTION AND OF SOME OF ITS PREFERRED EMBODIMENTS

Device for the detection of a seismic event

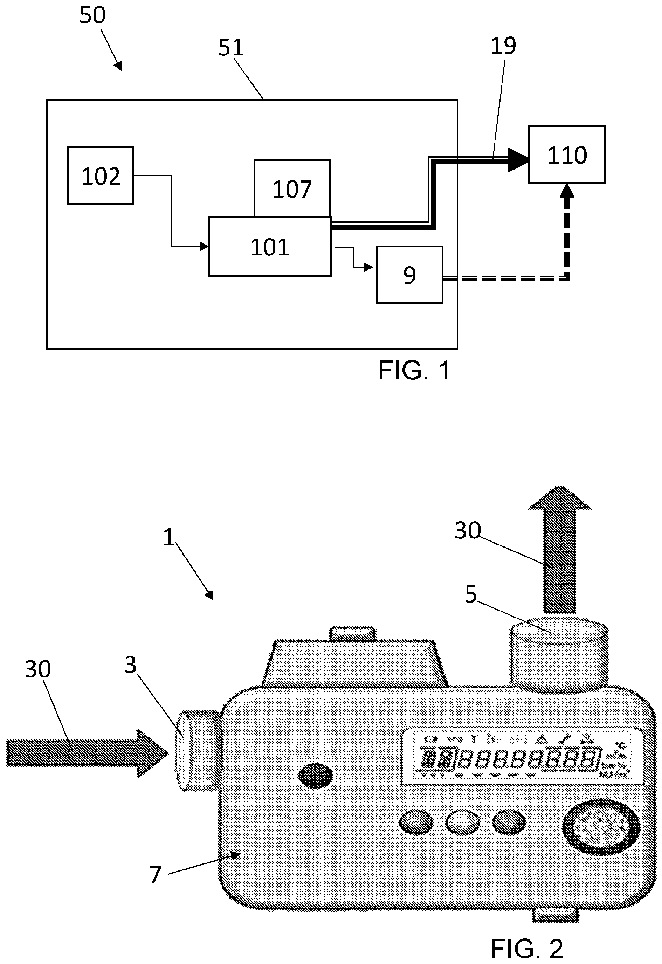

The present disclosure relates to a device 50 (see fig. 1) for the detection of a seismic event as shown in fig. 1.

The device 50 comprises at least one accelerometer 102 for detecting the movements and/or vibrations of the apparatus itself along three mutually orthogonal axes. Conveniently, said at least one accelerometer has three axes (ie the three axes X, Y and Z orthogonal to each other). Preferably, the accelerometer is made using MEMS technology (ie "Micro Electro-Mechanical Systems").

The device 50 comprises at least a processing unit 101 which is electronically connected to said at least one accelerometer 102 to receive and thus process the acceleration data acquired by the latter along three mutually orthogonal axes.

Preferably, the accelerometer 102 and said processing unit 101 are mounted on the same electronic board. Conveniently, the processing unit 101 is implemented by a corresponding processor. Preferably, the processing unit 101 comprises a microprocessor or a microcontroller.

The device 50 comprises a container 51 inside which the accelerometer 102 and the processing unit 101 are housed.

Preferably, the device 50 comprises storage means 107 which can be connected and/or implemented in the processing unit 101. Conveniently, said storage means are configured to store, at least temporarily, the data detected by the accelerometer 102 and/or possibly processed by said processing unit 101.

Preferably, the device 50 comprises means of communication, via cable 19 or via wireless 9, with an external apparatus 110, to thus transmit to the latter corresponding signals and/or commands generated by the processing unit 101 of the device itself.

Conveniently, in a possible embodiment, said external apparatus 110 can comprise a data collection unit, preferably a central and remote data collection unit. Conveniently, in a possible embodiment, said external apparatus 110 comprises and/or consists (even exclusively) of an organ (valve) for intercepting the passage of a fluid. Conveniently, said interception organ (valve) is a safety valve, preferably it is of the on-off type. In particular, said interception organ (valve) can be controlled electronically and is configured to pass to a condition of closing the passage of the fluid following the receipt of a corresponding command generated by the processing unit 101 of the device 50 and sent by communication means via cable 19 or wireless 9. Conveniently, in a possible embodiment, said external apparatus 110 can be an apparatus for measuring a fluid which is configured to be mounted in correspondence with a passage of a fluid, in particular of gas or water or oil or other liquids or fluids, even multiphase, in general. Preferably, said external apparatus 110 is configured to be passed through by said fluid. Preferably, said external apparatus 110 is configured to carry out a measurement, preferably of flow rate or flow, of the fluid that passes through it. Preferably, said external apparatus 110 is a gas meter. Preferably, said interception member which is controlled by the device 50 can be provided inside said external apparatus 110.

Conveniently, the processing unit 101 of the device 50 is configured to implement one or more of the methods and/or procedures as per described below.

Apparatus for measuring a fluid configured for the detection of a seismic event

The present disclosure also relates to an apparatus (see fig. 2, 3 and 4) for measuring a fluid, preferably a gas, a liquid or a multiphase fluid.

Conveniently, the apparatus 1 is of the type intended to be crossed, at least in part, by said fluid. Preferably, the apparatus 1 is of the type provided for delivering gas to a user and is of the type configured to be crossed, at least in part, by a flow of gas coming from a supply network and to be supplied to said user.

Conveniently, the apparatus 1 is of the type configured to carry out the delivery and also the measurement of the gas which comes from a supply network and which, passing through the apparatus, is supplied to a user. Preferably, the device is suitable for carrying out a gas measurement for tax purposes and, in particular, it is configured to comply with the technical requirements defined by national or regional legislation (for example European) in order to be used in commercial transactions.

Conveniently, the apparatus 1 is configured to carry out a gas measurement that can be used to record gas consumption by the user to which the apparatus is connected.

In particular, apparatus 1 is intended to be connected at the inlet/upstream with a low or medium pressure gas distribution network, and to be connected at the outlet/downstream with a user that is intended to receive and be supplied with gas from said gas distribution network.

Conveniently, the apparatus 1 is provided with at least one gas inlet 30, for example connected to a pipe section provided upstream of the apparatus 1, and with a gas outlet, for example connected to a pipe section provided at downstream of said apparatus.

Conveniently, the apparatus 1 comprises a containment structure 7 in which are defined:

- at least one inlet opening 3 to allow fluid 30 to enter said containment structure, and
- an outlet opening 5 to allow the fluid 30, which has entered/circulated in said containment structure 7, to escape from the latter.

Conveniently, the containment structure 7 is watertight to prevent the escape of gas to the outside. Preferably, the containment structure 7 is formed by two or more parts joined together in such a way as to guarantee the tightness of the structure itself. Preferably, the containment structure 7 is made of metal, in particular of metal sheet.

In particular, the apparatus 1 is of the type configured to perform a series of measurements on the flow of gas that passes through and/or circulates in said apparatus.

The installation and use of the apparatus 1 in correspondence with the gas passage duct is described below, however it is understood that the same apparatus 1 can also be installed and/or used in correspondence with the passage duct for a liquid, in particular of water, preferably of a water delivery duct to a user, or even of a multiphase fluid.

Conveniently, the apparatus 1 comprises a module 2 for measuring the flow of gas 30 which passes through and/or circulates in said apparatus. Preferably, the measuring module 2 can be fluidically connected at the inlet with the chamber internally delimited by the containment structure 7, while at the outlet it is fluidically connected with the outlet opening 5, or it can be fluidically connected at the inlet with the opening of inlet 3, while at the outlet it is fluidically connected to the chamber delimited internally by the containment structure 7.

Conveniently, the measuring module 2 is configured to perform at least one measurement of the gas 30 useful for tax purposes and, in particular, is configured to comply the technical requirements defined by national or regional legislation (for example European) in order to be used in commercial transactions.

Preferably, the measuring module 2 can be of a traditional type in itself and, suitably, it is configured to comply with the regulatory requirements currently in force. Preferably, the measuring module 2 is of the type generally envisaged in "smart meters".

Conveniently, the measuring module 2 comprises at least one measuring module configured to detect at least one quantity of the gas flow that enters and passes through said apparatus 1. Preferably, the measuring module 2 can comprise sensors configured to measure a plurality of properties and/o characteristic values relating to the gas flow that passes through apparatus 1.

For example, in the measuring module 2 there is a measuring module that can be configured to measure the quantity of gas 30 that passes through the apparatus 1 in a given period of time. Furthermore, further measuring modules can be provided in the measuring module 2 which are configured to measure other properties of the fluid, such as pressure, velocity, composition and/or degree of impurity present, temperature, etc.

Conveniently, the measuring module 2 can comprise a measurement device that uses static type technologies for measuring the gas flow rate, preferably ultrasonic or thermo-mass. Advantageously, the use of these technologies allows to detect reduced flow rates (for example ≤ about 2 dmc/h) in a short time (for example ≤ about 2s).

The apparatus 1 also comprises at least one accelerometer 102 for detecting the movements and/or vibrations of the apparatus itself along three mutually orthogonal axes. Conveniently, said at least one accelerometer has three axes (ie the three axes X, Y and Z orthogonal to each other). Preferably, the accelerometer is made using MEMS technology (ie "Micro Electro-Mechanical Systems").

Conveniently, the accelerometer 102 can be mounted inside or outside the containment structure 7 of the apparatus 1. Conveniently, the accelerometer 102 is installed on an electronic board which can be mounted inside and/or on the exterior of the containment structure 7 of the apparatus 1.

Preferably, the accelerometer 102 is mounted on an electronic board which is in contact with the internal walls of the containment structure 7 and/or with sections integral with/integrated in said structure 7. Preferably, the accelerometer 102 can be mounted on the same electronic board as the electronic unit 11 or on a different electronic board.

The apparatus 1 also comprises at least a processing unit 101 which is electronically connected to said at least one accelerometer 102 to receive and thus process the acceleration data acquired by the latter along three mutually orthogonal axes. Preferably, the accelerometer 102 and said processing unit 101 are mounted on the same electronic board. Conveniently, the accelerometer 102 and said processing unit 101 can be mounted on different electronic boards. Conveniently, the processing unit 101 is implemented by a corresponding controller/computer/processor. Preferably, the processing unit 101 comprises a controller/computer/processor and, more preferably, it comprises a microprocessor or a microcontroller.

Advantageously, the processing unit 101 is provided and/or is associated with storage means 107 for storing, at least temporarily, the data detected by the accelerometer 102 and/or possibly processed by said processing unit 101.

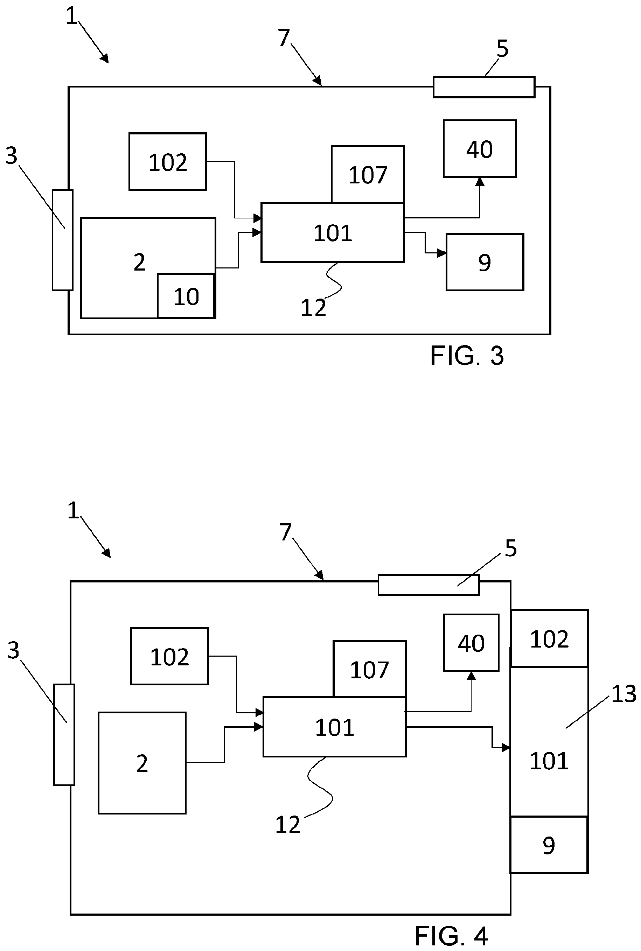

In a possible form of embodiment (see Fig. 3), the apparatus 1 comprises a single controller/computer/processor 12 which thus defines said processing unit 101. This single controller/computer/processor 12 is also electronically connected to said measuring module 2 and it is configured to receive and also process the readings (measurements) made and coming from the sensors of the measuring module 2. Preferably, this single controller/computer/processor 12 can be incorporated/mounted on said measuring module 2 and is electronically connected with any other components with which the apparatus 1 is provided. In particular, the controller/computer/processor 12 is configured to control/command at least one component of the measuring module 2. Advantageously, this single controller/computer/processor 12 is configured to act as a control and command unit, and preferably also for processing and/or storage, for said apparatus 1. This unique controller/computer/processor 12 can be housed inside the containment structure 7 of the apparatus 1 or, according to an embodiment not shown, can be associated externally to the wall of the containment structure 7.

In another possible embodiment (cf. fig. 4), the apparatus 1 comprises a first controller/computer/processor 12 and a second controller/computer/processor 13, of which at least one of the two defines said processing unit 101. Preferably, the first controller/computer/processor 12 is connected and/or mounted on the measuring module 2 inside the containment structure 7, while the second controller/computer/processor 13 is mounted externally on the containment structure 7. Conveniently, the first controller/computer/processor 12 and the second controller/computer/processor 13 are electronically connected to each other. Preferably, in the embodiment shown in fig. 4, the processing unit 101 is defined by the second controller/computer/processor 13 which is mounted externally with respect to the containment structure 7, however - in a possible embodiment not shown here, the processing unit 101 could be defined by the first controller/computer/processor 12 housed inside the containment structure 7. Preferably, the accelerometer 102 can be mounted on the same electronic board on which said second controller/computer/processor 13 is mounted.

The apparatus 1 can also comprise means 9 for remote data communication (not shown), preferably it can comprise means of transmission or transceiving with a remote unit. Conveniently, said communication means 9 can be of the wireless type (in particular via infrared or via radio, for example Wi-Fi). Conveniently, these communication means 9 can be connected and/or integrated into the only controller/computer/processor 12 provided (see Fig. 3) or they can be connected and/or integrated into the second controller/computer/processor 13 (see Fig. 3, Fig. 4). Preferably, the communication means 9 can be configured to allow the apparatus 1 to interact and exchange data and/or information and/or commands with an external portable device (not shown), such as for example a smartphone or a tablet. Advantageously, the communication means 9 can be configured to allow the apparatus 1 to interact and exchange data and/or information and/or commands with an external processing unit. Preferably, the external processing unit can define an external central unit - preferably remote, for example a SAC (ie central acquisition system) - which is configured to receive data and/or information from one or more apparati 1.

The apparatus 1 can also comprise a storage unit 10 for recording data relating to the manufacturing characteristics of the apparatus 1 and/or its operation, preferably concerning the quantities (possibly processed) detected by the sensors of the measuring module 2. Preferably, the storage unit 10 is connected and/or integrated in the measuring module 2.

The apparatus 1 comprises an shut-off valve 40 which is housed inside the containment structure 7 and which is electronically connected to the processing unit 101 to be thus controlled by the latter. In particular, in the event of a dangerous/risky seismic event being detected, according to the method described below, the processing unit 101 sends a corresponding command in order to cause the shut-off valve 40 of the apparatus 1.

Advantageously the the processing unit 101 of the apparatus 1 is configured to implement one or more of the methods and/or procedures as described below.

Method for identifying/recognizing a vibrational event that is dangerous/risky and that is caused by a seismic phenomenon

Conveniently, a vibrational event can be classified as "dangerous/risky" if it has characteristics of intensity and frequency that are risky and dangerous, or it can be classified as "not dangerous/risky" if it has characteristics of intensity and frequency that are not risky and dangerous. Conveniently, according to the invention, to establish whether or not the intensity and frequency characteristics of a vibrational event are risky/dangerous, at least a predefined intensity threshold Th1 is used which is connected to a predefined frequency ThF, preferably a plurality of predefined intensity thresholds Th1, each of which is linked to a respective predefined frequency ThF.

Appropriately, a vibrational event can also be classified as a "seismic event" if it is a vibrational event that is caused by a seismic phenomenon, or it can be classified as a "non-seismic event" if it is a vibrational event that is caused by an environmental disturbance or other factors not connected to a seismic phenomenon. More in detail, the term "seismic event" hereinafter means a vibrational event that is caused by a real or possibly even simulated seismic phenomenon (ie reproduced in the laboratory, for example by means of a vibrating/seismic table), thus applying vibrational trends typical of real seismic phenomena.

The present invention relates to a method for verifying whether a vibrational event has a higher intensity than a predefined intensity threshold Th1 (preferably higher than at least one predefined intensity threshold Th1), which is linked to a predefined frequency ThF, preferably in order to consider/classify the vibrational event as "dangerous/risky", this method is characterized by the fact that:

    a) the data detected by at least one accelerometer 102 are acquired along two axes, respectively X and Y, which are perpendicular to each other,
    b) the values of frequency F and intensity I of at least one portion of the signals, derived from the acceleration data thus acquired along the two axes X and Y, are determined when they exceed a threshold of predefined intensity Th2 (which is lower than said at least one threshold Th1), and in particular the values of frequency F and intensity I are determined for each portion of said signals in which said threshold of predefined intensity Th2 is exceeded,
    c) on the basis of the frequency F thus determined, the predefined intensity threshold Th1 is identified, and in particular a corresponding predefined intensity threshold Th1 is identified on the basis of the frequency F thus determined for each portion that exceeds said threshold of predefined intensity Th2,
    d) it is verified whether the intensity I thus determined is higher or less than the predefined intensity threshold Th1 thus identified, to establish whether the vibrational event from which said signals were derived has or not intensity greater than the Th1 predefined intensity threshold thus identified.

Preferably, if the intensity I thus determined is higher than the predefined intensity threshold Th1 thus identified, we consider the vibrational event - from which the signals used to determine the frequency F and the intensity I have been derived - such as to require a corresponding corrective action (for example closing the passage of fluid through and/or out of an apparatus). Preferably, if the intensity I thus determined is higher than the predefined intensity threshold Th1 thus identified, the execution of a corresponding corrective action is commanded.

Conveniently, the method according to the invention - identified as a whole with the reference number 206 - is configured to identify/recognize a vibrational event that has an intensity equal to or greater than at least a predefined threshold Th1, connected to a certain frequency ThF, and which is caused by a seismic phenomenon. Preferably, seismic events which, at a given frequency ThF, have an intensity equal to or greater than at least a predefined threshold Th1 are seismic events which, at the regulatory level, identify situations of risk or danger.

The present invention relates to a method for identifying an event which is caused by a seismic phenomenon and which has an intensity equal to or greater than at least a predefined intensity threshold Th1 which is connected to a predefined frequency ThF, preferably in order to consider/classify a vibrational event as "risky/-

dangerous" and also as "seismic", this method is characterized by the fact that:

a) the data detected by at least one accelerometer 102 is acquired along two axes, respectively X and Y, which are between their perpendiculars,
e) the values of frequency F and intensity I of at least one portion of the signals are determined which are derived from the acceleration data thus acquired along the two axes X and Y and which have exceeded a predefined intensity threshold Th2 (which is lower than said threshold Th1), and in particular the values of frequency F and intensity I are determined for each portion of said signals in which said intensity threshold is exceeded a predefined Th2 intensity threshold,
b) on the basis of the frequency F thus determined, the predefined intensity threshold Th1 is identified, and in particular a corresponding predefined intensity threshold Th1 is identified on the basis of the frequency F thus determined for each portion that exceeds said threshold of predefined intensity Th2,
c) if the intensity I thus determined is higher (considering its absolute value) than the predefined intensity threshold Th1 thus identified, the corresponding signals are processed so as to bring them into the frequency domain,
d) on the basis of signals carried in the frequency domain it is determined whether the event, from which said signals are derived, is caused or not by a seismic phenomenon, in order to be able to consider/classify said vibrational event as an event that is, at the same time, seismic and risky/dangerous.

Preferably, if it is confirmed that said vibrational event is caused by a seismic phenomenon and is dangerous/risky, a corresponding corrective action is commanded, for example the closure/interruption of the fluid flow through and/or inlet/outlet to/from a device.

In particular, on the basis of the frequency F thus determined, a predefined intensity threshold value Th1 is identified which is combined with a predefined frequency ThF which corresponds or in any case is the closest to the frequency F thus determined.

Preferably, said method provides for carrying out the aforementioned steps b), c), d) and e) whenever a portion of the signals, which are derived from the acceleration data acquired along the X axis or along the Y axis, have exceeded the Th2 predefined intensity threshold.

Conveniently, said method is implemented by means of a computer or processor or controller, preferably it is implemented by the processor or controller of a device 50, as described above, or of an apparatus 1, as described above, for measuring at least one quantity of a fluid which crosses it.

Conveniently, the present disclosure also relates to a software module, preferably firmware, which is loaded and/or executed inside the processor or controller of the device 50 or of the apparatus 1.

Conveniently, the data detected by at least one long accelerometer 102 are acquired along two X and Y axes which are perpendicular to each other and horizontal (or substantially horizontal) and, preferably, the data collected are processed in such a way as to align/project them respectively along two axes that are perpendicular to each other and also perpendicular to the earth's gravitational axis.

Conveniently, the data detected by at least one accelerometer 102 along two X and Y axes are acquired which, preferably, correspond respectively to the Xa and Ya axes of the reference system of the accelerometer 102 after they have been processed so that the third axis Za of the reference system of the accelerometer 102 is aligned with the earth's gravitation axis G.

Preferably, said at least one predefined threshold Th1 is set and defined by the sector regulations. Preferably, the Th1 predefined threshold intensity values for each predefined frequency ThF are predetermined and pre-stored, and are preferably defined or derived from the sector regulations. Preferably, said threshold value Th2 is lower (in terms of absolute value) than Th1.

Conveniently, the signals derived from the acceleration data along the two axes X and Y are pseudo-periodic signals and are reconstructed from data detected by the accelerometer 102 at at least one predefined sampling frequency.

Preferably, the accelerometer 102 is configured to operate in at least two modes:

- a first rest mode ("sleep" or "standby") in which the data are detected/acquired at a first sampling frequency (for example about 12.5Hz), and
- a second operating mode (or "measurement") in which the data are detected/acquired at a second sampling frequency (for example about 100Hz), which is higher than said first sampling frequency.

Preferably, the data detected by at least one accelerometer along said at least two axes X and Y are acquired when the accelerometer is in said second operating mode.

Preferably, only when the accelerometer is in said second operating mode, the values of frequency F and intensity I are determined, of at least one portion of the signals derived from the acceleration data thus acquired along the two axes X and Y, for each time that at least one portion of said two signals exceeds a predetermined threshold Th2. Preferably, said at least one portion of said two signals comprises a half-cycle of the corresponding signal.

Advantageously, the values of frequency F and intensity I of at least one portion of the signals - derived from the acceleration data thus acquired along the two axes X and Y when they exceed a threshold of predefined intensity Th2 - are determined by means of a pseudo-analysis. frequency.

Preferably, the pseudo-frequency analysis is performed separately for the signal derived from the detected/acquired data along the X axis and for the signal derived from the detected/acquired data along the Y axis. Preferably, the pseudo- frequency is configured to identify the parameters of frequency F and intensity I of a sine wave that is associated with the portion of the signal (derived from the data detected along the X or Y axis respectively), in particular defined by a semi-cycle, which has exceeded a predetermined intensity threshold Th2 relating to the intensity/amplitude of the signal. In particular, the sine wave is the one that best describes the signal portion.

Preferably, by means of the pseudo-frequency analysis, the frequency F of the signal is determined, deriving from the acceleration data along the X or Y axis, which has exceeded a predetermined threshold Th2, for example of 50mg.

Preferably, the frequency F of a portion of the signal that has exceeded a predetermined threshold Th2 is determined, and in particular the frequency of the half-cycle of the signal along the X axis and, separately, along the Y axis that has exceeded the predetermined threshold Th2. Conveniently, the predetermined threshold Th2 is defined by the same value both for the X axis and for the Y axis but it could also be defined by values different from each other.

Preferably, the frequency F is determined on the basis of a sinusoid Sin that passes through the time instants $t_1$ and t2 in which a portion of signal S, along the X axis or along the Y axis, has crossed (respective upward and descent, or vice versa) said threshold of predetermined intensity Th2 and which has an amplitude corresponding to the maximum intensity that said portion of signal S has within the time interval DTx or DTy defined between the time instants $t_1$ and $t_2$.

Preferably, the intensity I is determined on the basis of the intensity of the instantaneous modulus M of the acceleration data along the X and Y axes which is maximum within each time interval DTx or DTy within each period DTx or DTy defined between the time instants t1 and t2 (i.e. within each period in which the signal along the X axis or along the Y axis has exceeded the predetermined threshold Th2).

Preferably, by means of the pseudo-frequency analysis the intensity I is determined as the maximum intensity of the instantaneous modulus of the acceleration data along the X and Y axes respectively in the period (DTx) in which the signal along the X axis has exceeded the predetermined threshold Th2 and in the period (DTy) in which the signal along the Y axis has exceeded a predetermined threshold Th2. In particular, the intensity values I to be compared with Th1 are defined by the intensity of the instantaneous modulus M of the acceleration data along the X and Y axes which is maximum (ie INTx) within each period (DTx) in which the signal along the X axis has exceeded the predetermined threshold Th2 and which is maximum (ie INTy) within each period (DTy) in which the signal along the Y axis has exceeded a predetermined threshold Th2.

Advantageously, the pseudo-frequency analysis makes it possible to identify the frequency F of the acceleration signal - and therefore of the stress - detected along the X axis and along the Y axis of portions of the signal itself that have exceeded a predetermined threshold Th2. Preferably, the pseudo-frequency analysis involves identifying the sinusoid "Sin" of the data acquired along the X axis and, separately, of the data acquired along the Y axis which has an amplitude equal to the maximum or minimum amplitude (respectively IMx and IMy) of the portion (half-cycle) of signal that has exceeded (in positive or negative) a predetermined threshold Th2 and which at the same time passes through the time instants $t_1$ and $t_2$ in which the signal has crossed the predetermined threshold Th2 respectively with increasing and decreasing trend, or vice versa.

More in detail, in a possible and preferred embodiment, the pseudo-frequency analysis to determine the frequency F includes, for the acceleration data relative to the X axis (see fig. 3, but this also applies correspondingly to acceleration data relative to the Y axis), the following steps:

- time $t_{1x}$ in which the signal Sx exceeds the threshold Th2 (if defined by a positive value) is calculated by interpolation and the instant in time $t_{2x}$ in which the signal falls below the threshold Th2 is calculated by interpolation (if defined by a positive value), or vice versa in the case of Th2 threshold defined by a negative value;
- the maximum value IMx (or minimum in the case of Th2 defined by a negative value) of the signal intensity is determined in the time interval between $t_{1x}$ and $t_{2x}$;
- the sinusoid Sin-x is identified which passes through $t_{1x}$ and $t_{2x}$ and which has a maximum intensity equal to IMx,
- the time instants $t_{1x-0}$ and $t_{2x-0}$ in which the sinusoid Sin has an intensity equal to zero (in the example of fig. 3, $t_{1x-0}$ is approximately equal to 0.1 while $t_{2x-0}$ is approximately equal to 0.58s),
- the frequency F of the sinusoid Sin is identified by calculating the inverse of the double of the time interval (which thus defines a half-period T/2 of the sinusoid Sin) defined between the time instants $t_{1x-0}$ and $t_{2x-0}$.

Conveniently, therefore, the frequency F is determined on the basis of the time instants $t_{1x}$, $t_{2x}$ - and also DTx which is defined by ($t_{2x}$ - $t_{1x}$) - and IMx, as just defined above.

More in detail, in a possible and preferred embodiment, the pseudo-frequency analysis to determine the intensity I includes, for the acceleration data relative to the X axis (see fig. 4, but this also applies correspondingly for acceleration data related to the Y axis), the following steps:

- the instantaneous modulus M (ie $\sqrt[2]{Ax^2 + Ay^2}$) is calculated using the data acquired along the X axis and the data acquired along the Y axis; preferably, but not necessarily, the modulus M can only be calculated within the time intervals (e.g. DTx or DTy) in which the signal along X or Y has exceeded the threshold Th2,

- I is determined as the maximum value INTx of the instantaneous modulus M thus calculated within the time interval DTx between $t_{1x}$ and $t_{2x}$ (ie within the time interval in which the signal derived from the acquired data along X has exceeded the pre-set threshold Th2).

Conveniently, the same steps are carried out to determine a corresponding value of I for all the intervals DTy between $t_{1y}$ and $t_{2y}$ in which the signal derived from the acquired data along Y has exceeded the predetermined threshold Th2.

Conveniently, the frequency F and the intensity I are determined at the end of the half-cycle in which the signal, along X or along Y, has exceeded the threshold Th2, i.e. they are determined subsequently with respect to the time instant $t_2$ in which the signal has crossed in descent (or in ascent, in the case of negative intensity) the Th2 threshold.

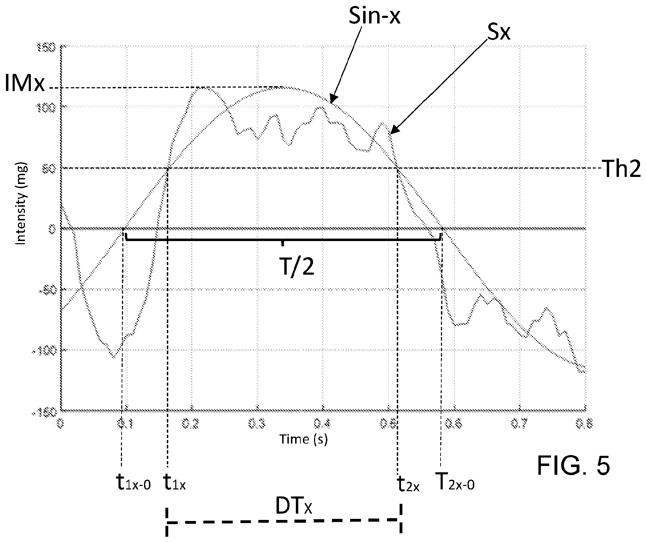

Using the frequency F thus determined, a search is carried out within pre-memorized data which are organized in such a way that, to a certain frequency value ThF, a certain intensity threshold value Th1 is associated/connected. In particular, the pre-stored data are defined by a plurality of pairs of values, each of which comprises a certain frequency value ThF and a certain intensity threshold value Th1. Therefore, a plurality of intensity threshold values Th1 are conveniently provided/stored, each of which is associated with a determined ThF frequency value. More in detail, as shown in Figure 5, the pairs of values ThF, Th1) can define a dividing line L which divides the frequency - intensity graph into two zones: a first zone Z1 which contains vibrational events (for example E5) of potentially risky and/or dangerous intensity and frequency (i.e. vibrational events that can be classified as risky/dangerous), and preferably such as to require corrective action (such as interrupting the gas flow), and a second zone Z2 which contains vibrational events (for example E1, E2, E3 and E4) of intensity and frequency that are potentially non-risky and/or dangerous (i.e. vibrational events that can be classified as non-risky/dangerous), and preferably such as not to require any corrective action (such as interruption of the gas flow).

Conveniently, the threshold value Th1 is then extracted from the pre-stored data which is associated/connected to a determined frequency value ThF which corresponds, or in any case is the closest, to the frequency F as determined.

The intensity I thus determined is compared with the predefined threshold value Th1 thus identified/extracted and if I is greater than Th1 then a corrective action is carried out or, preferably, a further step is carried out - ie step e) - to in order to discriminate whether the event which is characterized by the intensity I and frequency F thus determined is caused by a seismic phenomenon or not. In particular, if I is greater than Th1 then the event characterized by intensity I and frequency F belongs to the first zone Z1 and is therefore a vibrational event that can be classified as "risky/dangerous", while if I is less than Th1 then I The event characterized by intensity I and frequency F belongs to the first zone Z2 and is therefore a vibrational event that can be classified as "not risky/dangerous".

Conveniently, if I is greater than Th1 then the event characterized by intensity I and frequency F belongs to the first zone Z1 and is therefore a risky/dangerous event, and one then proceeds by carrying out subsequent and further elaborations bringing i to the frequency domain corresponding signals that are associated with the vibrational event of intensity I and frequency F and this in order to discriminate if the vibrational event is of a seismic type, that is, if it was actually caused by a seismic phenomenon or if it was caused by other factors, in particular from environmental disturbances (such as for example a pneumatic hammer or the passage of a train). Advantageously, a predefined number of data (for example 128 data) are brought into the frequency domain around the signal portion - and preferably around the half-cycle, and more preferably at the instant $t_2$ - which is characterized by F and I such as to consider the vibrational event (which is associated with said F and I) as risky/dangerous.

In particular, a predefined number of data (for example 128 data, i.e. the data acquired in 1.28s at 100Hz) acquired along X and Y around the signal portion (preferably of the half cycle) which is characterized by F which corresponds to or is close to ThF and by I greater than the predetermined threshold Th1 which is connected to the predefined frequency ThF, i.e. around the vibrational event of intensity I and frequency F such as to belong to the first zone Z1 and that is a vibrational event of potentially risky and/or dangerous intensity and frequency. Conveniently, a predefined number of data (for example 128) which are preceding and/or - preferably - subsequent to the instant of closing of the half-cycle (ie $T_{2x-0}$) can be brought into frequency.

Advantageously, the corresponding signals are processed so as to bring them into the frequency domain using a time-frequency transform, preferably the discrete Fourier transform (DFT), and even more preferably the fast Fourier transform (FFT).

Advantageously, the signals carried in the frequency domain are processed by calculating the cumulative frequencies. Preferably, the signals carried in the frequency domain are processed by calculating the cumulative frequencies in at least two predefined frequency intervals, for example 0-15 Hz and 15-50Hz.

Advantageously, on the basis of the cumulated frequencies thus calculated, a characteristic coefficient CC is then determined, preferably a coefficient for each predefined frequency interval used for the calculation of the cumulated frequencies.

Advantageously, at least one characteristic coefficient CC thus calculated is compared with a Th3 threshold, to identify an event that is seismic, thus confirming or not that the vibrational event - which had previously been identified as risky/dangerous - was actually caused by a seismic phenomenon.

Advantageously, if it is thus determined that the event, which was deemed risky/dangerous, was caused by a seismic phenomenon, a corresponding command is sent, preferably a command to activate a corrective action, for example the interruption/closure of the passage of the fluid through the apparatus 1 or through the external apparatus 110 connected to the device 50, while in the case in which it is determined that said event, which has been considered risky/dangerous, was not caused by a seismic phenomenon, the interruption/closure of the fluid passage is not commanded.

Advantageously, the method provides that, to determine whether or not a vibrational event is caused by a seismic phenomenon, at least one parameter is also used, obtained by applying at least one digital filter, preferably IIR, on the data acquired and detected by at least one accelerometer 102 along said two X and Y axes which are perpendicular to each other. Preferably, the method provides for determining whether a vibrational event - preferably of frequency F and which has intensity I higher than a predefined threshold Th1 (which is associated with a determined frequency ThF equal to or close to F) - is caused or not by a seismic phenomenon on the basis of the signals, which are associated with said event, carried in the frequency domain and also on the basis of parameters obtained by applying at least one digital filter, preferably IIR, on the data acquired and detected by said at least one accelerometer 102 along the two axes X and Y which are perpendicular to each other.

Conveniently, a first digital filter, preferably IIR, of the high pass type and a second digital filter, preferably IIR, of the low pass type, is applied to the data acquired and detected by at least one accelerometer along the two axes X and Y which are perpendicular to each other. More in detail, said first digital filter is applied to the data acquired and detected by at least one accelerometer along the X axis, said first digital filter is applied to the data acquired and detected by at least one accelerometer along the Y axis, said second digital filter is applied on the data acquired and detected by at least one accelerometer along the X axis, said second digital filter is applied to the data acquired and detected by at least one accelerometer along the Y axis. Preferably, the digital filters are always applied on all data acquired and detected by at least one accelerometer along the two axes X and Y.

Conveniently, on the basis of the outputs of the digital filters, at least one coefficient CD is calculated to be compared with a predefined threshold value Th4. Preferably, said coefficient CD is calculated as the ratio between the effective value (RMS) calculated on the output of the first digital filter (ie the high pass one) and the effective value (RMS) calculated on the output of the second digital filter (ie the low pass one). Preferably, said coefficient CD is calculated only when a vibrational event of frequency F is identified which has intensity I higher than a predefined threshold Th1, which is associated with a determined frequency ThF equal to or close to F, i.e. only when an event is identified which vibrational intensity and frequency are potentially risky and/or dangerous (ie of the type belonging to the first zone Z1). Preferably, said CD coefficient is calculated after a certain time interval (for example about 3 seconds) has elapsed from the moment in which I have identified a vibrational event of potentially risky and/or dangerous intensity and frequency.

Advantageously, the method provides that:

- if the CD coefficient calculated on the basis of the filter outputs is lower (or higher) than the predefined threshold value Th4, then it is immediately confirmed that the vibrational event - of frequency F and that has intensity I higher than a predefined threshold Th1 (which is associated with a determined frequency ThF equal to or close to F) - is caused by a seismic phenomenon,
- if instead the calculated CD coefficient is higher (or lower) than the predefined threshold value Th4, one proceeds by considering the signals associated with said event and which are brought into the frequency domain and, in particular, one proceeds by comparing the characteristic coefficient (calculated on the basis of the signals carried in the frequency domain) with the Th3 threshold; in particular, then, it is envisaged that:

  - if the characteristic coefficient CC calculated on the basis of the signals carried in the frequency domain is higher (or smalle) than the threshold value Th3, then it is confirmed that the vibrational event - of frequency F and that has intensity I higher than a threshold default Th1 (which is associated with a specific frequency ThF equal to or close to F) - is caused by a seismic phenomenon,
  - if the characteristic coefficient CC calculated on the basis of the signals carried in the frequency domain is lower (or higher) than the threshold value Th3, then it is confirmed that the vibrational event - of frequency F and that has intensity I higher than a threshold predefined Th1 (which is associated with a specific frequency ThF equal to or close to F) - is not caused by a seismic phenomenon, but by an environmental disturbance or other phenomena.

Advantageously, therefore, by using the values RMS) calculated on the basis of the outputs of the digital filters applied on the acquired data and detected by at least one accelerometer 102 along the two axes X and Y, it is possible to obtain a coefficient CD which, if it was lower than the threshold Th4, allows to promptly confirm that the event is caused by a seismic phenomenon, and this independently of the elaborations carried out on the signals carried in the frequency domain, on the contrary, if the aforementioned CD coefficient is higher than the Th4 threshold, it is appropriate to consider the signals carried in the frequency domain and thus calculate the characteristic coefficient CC which is more robust in the conditions in which CD is higher than Th4.

Advantageously, the method also provides that, in the event of identification of an event that is caused by a seismic phenomenon and that has an intensity greater than a predefined threshold Th1 at a given frequency ThF, an interruption of the fluid flow incoming and/or outgoing and/or inside the apparatus 1 or the external apparatus 100 connected to the device 50 is commanded. Preferably, said apparatus is the same apparatus 1 inside which said accelerometer 102 is installed which detects the acceleration data along the two axes X and Y (see fig. 2-4), or said apparatus can be an external apparatus 100 which is connected to the device 50 inside which the accelerometer 102 is installed, which detects the acceleration data along the two axes X and Y.

Conveniently, the processing unit 101 provided in the device 50 or in the apparatus 1 is configured to implement a method as described above in its essential and/or preferential aspects. Preferably, a software module configured to implement a method as described above in its essential and/or preferential aspects is loaded and/or executed in the processing unit 101 of the device 50 or of the apparatus 1.

Procedure for aligning an accelerometer axis with the earth's gravitation axis

The present disclosure also relates to a procedure for aligning an accelerometer axis with the earth's gravitation axis, which is not encompassed by the wording of the claims but is considered as useful for understanding the invention.

In particular, this procedure also allows to identify the spatial rotation matrix to align the three axes Xa, Ya and Za - orthogonal to each other - of the accelerometer 102 so that one of said three axes, and in particular the Z axis, is aligned, or substantially aligned, with the Earth's gravitational axis.

The procedure (indicated as a whole with the reference number 201) to align/project an axis of the reference system (Xa, Ya, Za) of the accelerometer with the gravitational axis of the earth is characterized by the fact that:

- the data detected by at least one accelerometer 102 respectively along three axes Xa, Ya and Za of the reference system of the accelerometer itself and which are perpendicular to each other are acquired,
- on the basis of the acquired data, the average values of said data are calculated for each of the three axes Xa, Ya and Za,
- on the basis of the average values thus calculated, the parameters of at least one system for representing the orientation and/or spatial rotation are identified to align one of said three axes, for example the axis Za, of the accelerometer reference system with the Earth's gravitation axis G.

Conveniently, the procedure allows to identify the parameters of at least one system of representation of the orientation and/or spatial rotation to align the Za axis of the reference system of the accelerometer with the gravitational axis terrestrial G and to align the Xa and Ya axes of the accelerometer's own reference system along two directions, perpendicular to each other, which are horizontal.

Preferably, in a possible embodiment, the procedure provides, on the basis of the data acquired respectively along the three axes Xa, Ya and Za of the reference system of the accelerometer itself, to select - among said three axes - an axis, for example the axis Za, as the axis along which the acquired data have the highest values and on the basis of the average values thus calculated, the parameters of at least one system of representation of the orientation and/or spatial rotation are identified for align the selected axis, such as the Za axis, of the accelerometer reference system with the Earth's gravitation axis.

Preferably, the parameters of at least one system of representation of the orientation and/or of the spatial rotation, thus identified, are applied to the data that are acquired along the axis Za of the reference system of the accelerometer, thus obtaining data that are acquired along the gravitational axis of the earth G and, correspondingly, the data acquired along the other two axes Xa and Ya of the accelerometer's own reference system are instead acquired along two axes, perpendicular to each other, which are horizontal since they are perpendicular to the Earth's gravitational axis G.

Preferably, the average values of said data are calculated directly for each of the three axes Xa, Ya and Za. Preferably, the average values of said data are calculated for each of the three axes Xa, Ya and Za on the basis of a group of previously stored data.

Advantageously, the parameters of at least one system for representing the orientation and/or spatial rotation are identified to align the axis Za with the gravitational axis of the earth.

Preferably, said orientation and/or spatial rotation representation system comprises a rotation quaternion, in particular the Hamilton quaternion. Preferably, said system for representing the orientation and/or the spatial rotation can comprise at least one rotation matrix or the Euler angles.

Preferably, before calculating the average values of said data for each of the three axes Xa, Ya and Za of the reference system of the accelerometer 102, it is checked that the acquired data are not disturbed, and that in particular they correspond to a situation of substantial quiet - that is substantially absence of vibrations and external stress - of the accelerometer 102.

Preferably, to verify that the acquired data are not disturbed, it is calculated, for the data acquired along each of the three axes Xa, Ya and Za of the proper reference system of the accelerometer 102, the standard deviation over a floating window of data. Conveniently, in more detail, this phase of verifying that the data acquired along each of the three axes Xa, Ya and Za of the reference system of the accelerometer 102 are not disturbed, involves carrying out the following steps:

- the standard deviation is calculated on a floating window comprising a finite number of data (e.g. 100-150 data) acquired along an axis,
- we compare the standard deviation with at least one threshold value Th5 and, on the basis of this comparison, update or not the average value calculated for the corresponding axis.

Preferably, if the calculated standard deviation is lower than the Th5 threshold value, the last value of the floating window to update the average value calculated for the corresponding axis is considered, while if the calculated standard deviation is greater than the Th5 threshold value, it is discarded the data and advances the floating window.

Preferably, the step of verifying that the data acquired along each of the three axes Xa, Ya and Za of the reference system of the accelerometer 102 are not disturbed is repeated until the average value is calculated on the basis of a predefined number N of values and/or until the live average value is updated for a predefined number N of times.

Conveniently, the processing unit 101 of the device 50 or of the apparatus 1 is configured to implement a procedure, for aligning an axis Xa, Ya and Za of the own reference system of the accelerometer 102 with the gravitational axis of the earth G, so as described above in its essential and/or preferential aspects. Conveniently, in the processing unit 101 of the apparatus 1 a software module configured to implement a procedure is loaded and executed to align an axis Xa, Ya and Za of the own reference system of the accelerometer 102 with the gravitational axis of the earth G, as described above in its essential and/or preferential aspects.

Conveniently, since the accelerometer 102 is mounted inside the apparatus 1, this procedure also allows to detect any rotations of the accelerometer 102, and therefore of the apparatus 1, which occurred after installation, thus allowing a self-diagnosis of the device itself, as well as to identify any tampering with the device.

Advantageously, the present invention also relates to a method for detecting a seismic event in which, before acquiring the data detected by at least one accelerometer along two axes X and Y which are perpendicular and horizontal (or substantially horizontal) to each other, a procedure for aligning an axis of the accelerometer with the gravitational axis of the earth as described above.

## Procedure for determining the accelerometer offsets

The present disclosure also relates to a procedure for determining the offsets of the accelerometer 102 along the three axes Xa, Ya and Za - orthogonal to each other - of the accelerometer itself, which is not encompassed by the wording of the claims but is considered as useful for understanding the invention.

Advantageously, the offsets thus determined for each of the three axes Xa, Ya and Za of the accelerometer itself are compared with predefined threshold values, preferably provided by the accelerometer manufacturer, for example to verify that they lie within values of correct operation of the accelerometer itself.

Advantageously, the offsets thus determined for each of the three axes Xa, Ya and Za of the accelerometer itself are compared with predefined threshold values, in order to verify that the accelerometer 102 is not damaged.

Advantageously, the offsets thus identified for each of the three axes Xa, Ya and Za of the accelerometer itself are used to correspondingly compensate the data acquired by the accelerometer 102 along the corresponding axes, preferably to use the acquired data thus compensated in the method for the identification/recognition of a seismic event.

Advantageously, the offsets thus identified for each of the three axes Xa, Ya and Za of the accelerometer are stored to be thus used to correspondingly compensate the subsequent data acquired by the accelerometer 102 along the corresponding axes, in particular to compensate for the data which they are acquired along the X and Y axes in the aforementioned method for detecting a seismic event.

The procedure (indicated as a whole with the reference number 202) to identify the accelerometer offsets along three axes X, Y and Z orthogonal to each other is characterized by the fact of:

- acquiring the data detected by at least one accelerometer 102 respectively along three axes X, Y and Z which are perpendicular to each other,
- calculating, on the basis of the acquired data, the average values of said data for each of the three axes X, Y and Z,

- determining, on the basis of the average values thus calculated, the offsets for each of the three axes X, Y and Z

Advantageously the three axes X, Y and Z can correspond to the three axes Xa, Ya and Za of the reference system of the accelerometer 102 or they can correspond to the three axes Xa, Ya and Za of the reference system of the accelerometer 102 after they have been processed to align one with the Earth's gravitational axis G.

Preferably, they are calculated in direct the average values of said data for each of the three axes X, Y and Z, in particular the average value is calculated on the basis of the previously calculated average value and of a further/new data to be considered. Preferably, the average values of said data are calculated for each of the three axes X, Y and Z on the basis of a group of previously stored data.

Preferably, before calculating the average values of said data for each of the three axes X, Y and Z, it is verified that the acquired data are not disturbed, and that in particular they correspond to a situation of substantial quiet - i.e. substantially absence of vibrations and external stress - of the accelerometer 102.

Preferably, to verify that the acquired data are not disturbed, the standard deviation on a movable data window is calculated for the data acquired along each of the three axes X, Y and Z. Appropriately, in more detail, this phase of verifying that the data acquired along each of the three axes X, Y and Z are not disturbed involves the following steps:

- the standard deviation is calculated on a floating window comprising a finite number of data (e.g. 100-150 data) acquired along an axis,
- the standard deviation is compared with at least one Th5 threshold value and, on the basis of this comparison, the calculated mean value for the corresponding axis is updated or not,

Preferably, if the calculated standard deviation is lower than the Th5 threshold value, I consider the last value of the floating window to update the average value calculated for the corresponding axis, while if the calculated standard deviation is greater than the threshold value Th5, the data is discarded and the floating window is moved forward.

Preferably, the step of verifying that the data acquired along each of the three axes X, Y and Z are not disturbed is repeated until the average value is calculated on the basis of a predefined number N of values and/or until the average value calculated in direct it is not updated for a predefined number of times.

Conveniently, the processing unit 101 of the device 50 or of the apparatus 1 is configured to implement a procedure for identifying the accelerometer offsets along the three axes X, Y and Z orthogonal to each other, as described above in its essential and/or preferential aspects. Conveniently, a software module configured to implement a procedure for determining the accelerometer offsets along the three axes X, Y and Z orthogonal to each other is loaded and executed in the processing unit 101 of the device 50 or apparatus 1, thus as described above in its essential and/or preferential aspects.

Advantageously, the present invention also relates to a method for detecting a seismic event in which, before acquiring the data detected by at least one accelerometer along two axes X and Y which are perpendicular to each other, said procedure is carried out to identify the offsets of the accelerometer along the three axes Xa, Ya and Za - orthogonal to each other - of the reference system of the accelerometer itself or along the three axes Xa, Ya and Za - orthogonal to each other - of the reference system of the accelerometer itself processed in order to align one of the three axes (for example the axis Za) with the gravitational axis of the earth G

Conveniently, in this way, the data - preferably all the data - acquired by the accelerometer 102 in order to use them in the method for identifying a seismic event are compensated using the offsets determined with the procedure described above.

Preferably, the procedure for identifying the accelerometer offsets identifying the accelerometer offsets along the three axes X, Y and Z - orthogonal to each other - is carried out after carrying out the above procedure to align an axis of the reference system Xa, Ya, Za of the accelerometer with the gravitational axis of the earth G.

Procedure for determining the natural frequency (ie the natural frequency or autofrequency) of installation of a device or apparatus inside which the accelerometer is mounted

The present disclosure also relates to a procedure, not encompassed by the wording of the claims, to identify/estimate the natural installation frequency of a device 50 or of an apparatus 1 on which an accelerometer 102 is mounted configured to detect acceleration data along three axes X, Y and Z orthogonal to each other, preferably corresponding to the three axes Xa, Ya and Za of the accelerometer reference system which have been processed so that one of said three axes is aligned with the earth gravitation axis G. Preferably, the apparatus 1 is of the type configured to be traversed by at least one fluid, preferably a gas or a liquid or a multiphase fluid. Preferably, said apparatus 1 is a gas meter.

Advantageously, the procedure for identifying/estimating the natural frequency of installation of the device or apparatus allows to evaluate the reliability and correctness of the installation of the device or apparatus itself, in particular in terms of the rigidity of its fixing to an external element.

The procedure (indicated as a whole with the reference number 203) for identifying/estimating the natural reference frequency associated with the installation of a device 50 or apparatus 1 on which the accelerometer 102 is mounted is characterized by the fact that it is applied from the outside at least one stress on the device 50 or on the apparatus 1 (in particular respectively on the container 51 of the device 50 or on the containment structure 7 of the apparatus 1) and, for each applied stress, the following steps are carried out:

- acquire the data detected by the accelerometer 102, which is mounted on the device 50 or on the apparatus 1, respectively along three axes X, Y and Z which are perpendicular to each other,
- at least one portion of the three signals, derived from the data thus acquired respectively along the three axes X, Y and Z, is processed in order to bring it into the frequency domain,
- it is verified whether the passage to the frequency domain has occurred correctly and, only in the case of positive verification, the natural frequency (i.e. the minimum frequency or self-frequency) is determined for said at least one portion of each of the three signals, derived from the data thus acquired respectively along the three axes X, Y and Z, which has been brought into the frequency domain,

and on the basis of the natural frequencies thus determined for each applied stress, the natural reference frequency associated with the installation of the device 50 or apparatus 1 is determined.

Conveniently, the procedure provides for applying from the outside at least three stresses on the device 50 or apparatus 1 and, for each stress, the above steps are carried out. Preferably, each stress involves striking or hitting a wall of the container 51 of the device 50 or of the containment structure 7 of the apparatus 1.

Preferably, the three stresses are applied along three substantially orthogonal directions, preferably on mutually angled walls of the container 51 of the device 50 or of the containment structure 7 of the apparatus 1.

Advantageously, the stress can be of any kind and can be applied in any way and/or with any tool.

Preferably, on the basis of the signals derived from the acquired data, a stress event is identified and thus a portion of the signal is processed, corresponding to which the stress event has been identified, so as to bring it into the frequency domain. Preferably, a stress event is identified by comparing the amplitude of the signal (derived from the data thus acquired along the three axes X, Y or Z respectively), with a predefined threshold value Th6 and a predefined number of data of said signal is stored which are preceding and/or subsequent to the instant in time in which the amplitude of the signal itself has exceeded said predefined threshold value Th6. Conveniently, the data thus stored are processed in order to bring them into the frequency domain.

Advantageously, the corresponding signals are processed so as to bring them into the frequency domain using a time-frequency transform, preferably the discrete Fourier transform (DFT), and even more preferably the fast Fourier transform (FFT).

Conveniently, to verify whether the passage to the frequency domain has occurred correctly, for said at least one portion of each of the three signals, derived from the data thus acquired respectively along the three axes X, Y and Z, which has been brought into the domain frequency, the following operations are carried out:

- the number of peaks having an intensity greater than a Th7 threshold (for example 50% of the maximum intensity Amax) is counted and it is verified that it is less than a predefined number N,
- it is verified that the characteristic intensity of the null frequency (which corresponds to the first datum of the portion of the signal carried in the frequency domain) is less than a threshold value Th8 (for example 50% of the maximum intensity Amax).

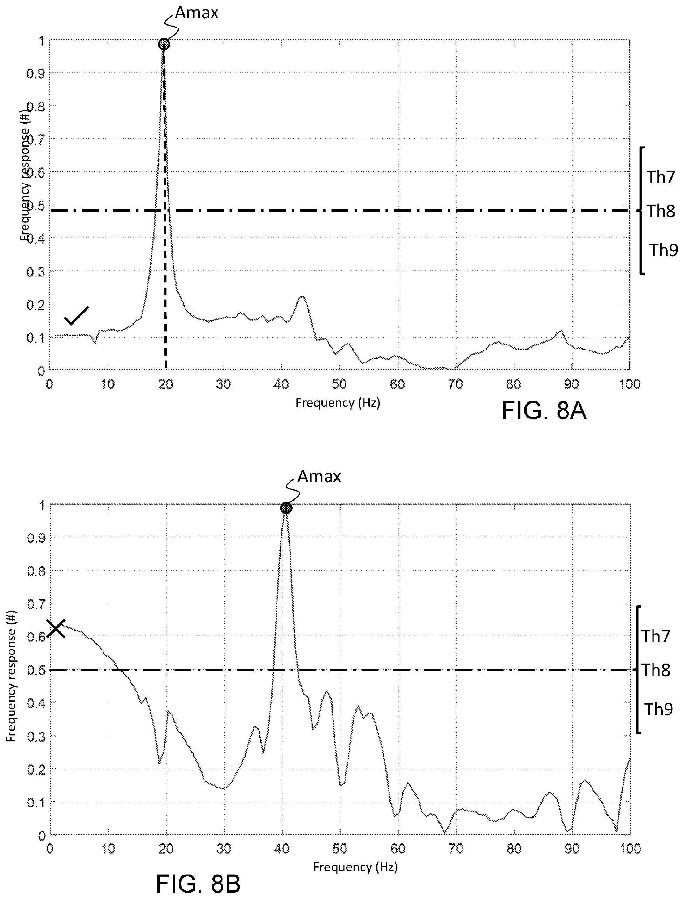

Conveniently, the above checks allow to evaluate whether the signal-to-noise ratio is favorable, in particular for eliminating the noise components. Conveniently, only if both of the above checks give positive results (see for example Fig.8A), then it is believed that the transition to the frequency domain has occurred correctly and then proceed to calculate the natural frequency, in case of negative outcome (see for example Fig.8B in which the characteristic intensity of the null frequency is greater than the threshold value Th8) then that portion of the signal brought into the frequency domain is excluded and, in particular, one does not proceed to calculate the natural frequency.

Conveniently, the natural frequency is calculated by determining the frequency corresponding to the first peak having an intensity greater than a Th9 threshold value (for example 50% of the maximum intensity Amax). For example, in the case of Fig. 8A, the natural frequency is 20 Hz.

Conveniently, the threshold values Th7, Th8 and Th9 can be equal to each other, and for example are defined by 50% of the maximum intensity.

Advantageously, for each portion of the signal brought into the frequency domain for which the calculation of the natural frequency is not carried out (and this in the face of the fact that the passage to the frequency domain has not occurred correctly), a corresponding counter is increased, preferably three counters, one for each of the three signals derived from the data acquired along the three axes X, Y and Z respectively. Conveniently, this counter can be representative of the reliability and correctness of the installation performed. For example, if following the application of three stresses, the counter - which is relative to the number of times that the signals, brought into the frequency domain, and derived from the data acquired along the Z axis have been excluded from the natural frequency calculation - it has reached three, it means that the installation of apparatus 1 detected along the Z axis is particularly rigid and stable, or that the signal/noise ratio is too low for that specific axis.

Conveniently, the processing unit 101 of the device 50 or of the apparatus 1 is configured to implement a procedure for identifying/estimating the installation frequency of the device or the apparatus itself, respectively, as described above in its essential and/or preferential aspects. Conveniently, a software module configured to implement a procedure for identifying/estimating the installation frequency, as described above in its essential and/or preferential aspects, is loaded and executed in the processing unit 101 of the device 50 or of the apparatus 1.

Advantageously, the present disclosure also relates to a method for detecting a seismic event which is implemented inside the processing unit 101 of a device 50 or of an apparatus 1 and in which, preliminarily, before carrying out the steps of said method, a procedure is carried out to identify/estimate the installation frequency of the device 50 or of the apparatus 1, respectively.

Method for checking the operating modes of the accelerometer

The present disclosure also relates to a method of checking the operating accelerometer 102, in particular in order to optimize the consumption of the accelerometer power supply battery. Advantageously, this allows to avoid excessive consumption of electrical energy by the accelerometer 102, in particular in the case in which the awakening is caused by an event not linked to a seismic phenomenon, such as an accidental event, for example a rapid voltage variation (spike) of the accelerometer power supply or blows in the vicinity of the device 50 or the apparatus inside which the accelerometer is mounted.

In particular, the accelerometer 102 is configured to operate in at least two modes:

- a first rest mode ("sleep" or "standby") in which the data is acquired at a first sampling frequency (for example about 12.5Hz), and
- a second operating mode (or "measurement") in which the data are acquired at a second sampling frequency (for example about 100Hz), which is higher than said first sampling frequency.

Preferably, in said first operating mode, the consumption of electrical energy by the accelerometer 102 is lower than that required/expected when operating in said second mode.

The accelerometer 102 is electronically connected to the processing unit 101 which also acts as a control and command for the accelerometer itself. In particular, the unit 101 controls the passage of the accelerometer 102 from the first mode to the second operating mode when the data acquired in said first mode are higher than a predefined threshold value Th9.

Upon passing from the first rest mode to the second operating mode of the accelerometer 102, the data detected by the accelerometer, at said second sampling frequency, respectively, begins to acquire data, for a predefined period of time (for example 5 seconds), at said second sampling frequency along the three axes X, Y and Z respectively, which are perpendicular to each other, preferably corresponding to the three axes Xa, Ya and Za of the accelerometer reference system, processed in such a way that one of said three axes is aligned with the gravitational axis of the earth G.

The method of controlling the operating modes of the accelerometer 102 is configured to quickly check whether a vibrational event, which thus caused the transition from the first to the second operating mode of the accelerometer 102, was caused or not by a seismic phenomenon. In particular, the method provides, in the event that the vibrational event is not caused by a seismic phenomenon, to promptly bring the accelerometer 102 back to operating in the first operating mode, thus allowing to save on the electricity supplying the accelerometer itself.

The method of checking - indicated as a whole with the reference number 207 - of the operating modes of the accelerometer 102 is characterized by the fact that:

- the data detected by the accelerometer 101 operating in said first mode along three axes X, Y and Z which are perpendicular to each other are acquired and, when at least one data thus acquired is higher than a predefined threshold value Th9, the accelerometer 102 starts to operate in said second mode,
- the data detected by the accelerometer 102 are acquired for a predefined period of time Tc, when it operates in said second mode, respectively along three axes X, Y and Z which are perpendicular to each other,
- the intensities of the data thus acquired and the frequency of the signals derived from the data thus acquired are compared with respective threshold values Th10,
- on the basis of said comparisons, it is established whether or not to return the accelerometer to work in said first mode.

Conveniently, the data detected by at least one accelerometer 102 along three axes Xa, Ya, Za, perpendicular to each other, of the accelerometer reference system itself are processed in such a way as to be brought into a reference system X, Y and Z in which one of these three axes is aligned with the Earth's gravitational axis G.

In particular, it is carried out:

- a first comparison between the frequency F of the signals derived from the data thus acquired and a predefined frequency threshold value TH10-F,
- a second comparison between the intensities of the data thus acquired along all three X, Y and Z axes and a predefined Th10-I intensity threshold value.

Preferably, a first comparison is made in which the frequency value F of at least one portion of the signals, derived from the acceleration data thus acquired along two axes X and Y which are horizontal and between, is compared with a predetermined frequency threshold Th10-F them perpendicular. In particular, it is compared if the frequency value F is greater than said threshold Th10-F (for example by 15Hz). Preferably, the frequency value F of at least one portion of the signals, derived from the acceleration data thus acquired along the two axes X and Y, is determined when they exceed a predefined intensity threshold Th2. Preferably, said at least one portion of said two signals comprises a half-cycle of the corresponding signal.

Advantageously, for a predefined period of time Tc, the frequency value F of the signal is determined by means of a pseudo-frequency analysis, each time it exceeds a predefined intensity threshold Th2, for example of 50 mg.

Preferably, the pseudo-frequency analysis is performed separately for the signal derived from the detected/acquired data along the X axis and for the signal derived from the detected/acquired data along the Y axis. Preferably, the pseudo- frequency is configured to identify the frequency F of a sine wave that is associated with the signal portion (derived from the data detected along the X or Y axis respectively), in particular defined by a semi-cycle, which has exceeded a predetermined threshold Th2 relative to the intensity/amplitude of the signal. In particular, the sine wave is the one that best describes the signal portion.

Preferably, by means of the pseudo-frequency analysis, the frequency F of the signal is determined, deriving from the acceleration data along the X or Y axis, which has exceeded a predetermined threshold Th2, for example of 50mg.

Preferably, the frequency F of a portion of the signal that has exceeded a predetermined threshold Th2 is determined, and in particular the frequency of the half-cycle of the signal along the X axis and, separately, along the Y axis that has exceeded the predetermined threshold Th2 is determined. Conveniently, the predetermined threshold Th2 is defined by the same value both for the X axis and for the Y axis but it could also be defined by values different from each other.

Advantageously, the pseudo-frequency analysis allows to determine the frequency F of the acceleration signal - and therefore of the stress - detected along the X axis and along the Y axis of portions of the signal that have exceeded a predetermined threshold Th2. Preferably, the pseudo-frequency analysis involves identifying the sinusoid "Sin" of the data acquired along the X axis and, separately, of the data acquired along the Y axis which has an amplitude equal to the maximum or minimum amplitude (respectively IMx and IMy) of the portion (half-cycle) of signal that has exceeded (in positive or negative) a predetermined threshold Th2 and which at the same time passes through the time instants $t_1$ and $t_2$ in which the signal has crossed the predetermined threshold Th2 respectively with increasing and decreasing trend, or vice versa. Preferably, the frequency F is determined on the basis of a sinusoid Sin that passes through the time instants $t_1$ and $t_2$ in which a portion of signal S, along the X axis or along the Y axis, has crossed (respective upward and descent, or vice versa) said threshold of predetermined intensity Th2 and which has an amplitude corresponding to the maximum intensity that said portion of signal S has within the time interval DTx or DTy defined between the time instants $t_1$ and $t_2$.

More in detail, in a possible and preferred embodiment, the pseudo-frequency analysis to determine the frequency F includes, for the acceleration data relative to the X axis (see fig. 3, but this also applies correspondingly to acceleration data relative to the Y axis), the following steps:

- time $t_{1x}$ in which the signal Sx exceeds the threshold Th2 (if defined by a positive value) is calculated by interpolation and the instant in time $t_{2x}$ in which the signal falls below the threshold Th2 is calculated by interpolation (if defined by a positive value), or vice versa in the case of Th2 threshold defined by a negative value;
- the maximum value IMx (or minimum in the case of Th2 defined by a negative value) of the signal intensity is calculated in the time interval between $t_{1x}$ and $t2_x$;
- the sinusoid Sin-x is identified which passes through $t_{1x}$ and $t_{2x}$ and which has a maximum intensity equal to IMx,
- the time instants $t_{1x-0}$ and $t_{2x-0}$ in which the sinusoid Sin has an intensity equal to zero (in the example of fig. 3, $t_{1x-0}$ is approximately equal to 0.1 while $t_{2x-0}$ is approximately equal to 0.58s),
- the frequency F of the sinusoid Sin is identified by calculating the inverse of the double of the time interval (which thus defines a half-period T/2 of the sinusoid Sin) defined between the time instants $t_{1x-0}$ and $t_{2x-0}$.
- the frequency value F thus identified is compared with the Th10-Fx threshold.

Preferably, a second comparison is made in which, for a predefined time interval Tc2 (for example of 1 second), which is lower than said time period Tc, the data, between their consecutive in time, of acceleration thus acquired along all three axes X, Y and Z. In particular, it is compared if for a certain time interval, all the acceleration data thus acquired along all three axes X, Y and Z are lower than the Th10-I intensity threshold.

Preferably, the accelerometer 102 is returned to said first operating mode only if:

- the frequency F, as determined above, of at least one portion of the signals, derived from the acceleration data thus acquired along two axes X and Y which are horizontal and perpendicular to each other, is higher than the predefined frequency threshold Th10-F (first comparison), and at the same time,
- for a certain consecutive time interval Tc2, all the acceleration data thus acquired along all three axes X, Y and Z are lower than the intensity threshold Th10-I (second comparison).

Preferably, the accelerometer continues to operate in said second operating mode if:

- the frequency F, as determined above, is lower than the Th10-F frequency threshold, or
- for a certain consecutive time interval Tc2, there is at least one acceleration datum acquired along the three axes X, Y and Z which is higher than the intensity threshold Th10-I.

Preferably, once said predefined period of time Tc has elapsed without having returned, on the basis of said comparisons, to the first operating mode, the accelerometer 102 continues to operate in said second operating mode.

Conveniently, the accelerometer 102 continues to operate/be in said second operating mode until a certain condition 209 of the end of the vibrational event occurs and, in particular, returns to said first operating mode when said certain condition occurs. Preferably, the accelerometer switches from the second operating mode to the first operating mode after the standard deviation - which is preferably calculated with floating windows on the data acquired along all three axes X, Y and Z - was found to be lower than a threshold value Th11 for all three said axes.

Conveniently, the processing unit 101 of the device 50 or of the apparatus 1 is configured to implement a method of controlling the operating modes of the accelerometer 102, as described above in its essential and/or preferential aspects. Conveniently, a software module configured to implement a method for controlling the operating modes of the accelerometer, as described above in its essential and/or preferential aspects, is loaded and executed in the processing unit 101 of the device 50 or apparatus 1.

Advantageously, the present invention also relates to a method for detecting a seismic event which is implemented inside the processing unit of an apparatus 1 and in which, in parallel, a method for controlling the operating modes of the accelerometer 102 is also implemented.

Procedures for calculating parameters relating to the vibrational event, preferably caused by the seismic phenomenon

The present disclosure also relates to a calculation procedure - indicated as a whole with the reference number 208 - starting from the data detected by at least one accelerometer respectively long three axes X, Y and Z which are perpendicular to each other, with X and Y horizontal and Z aligned with the Earth's gravitational axis G, by at least one of the following parameters:

- peak acceleration ("Peak Acceleration"), in order to know the extent of the critical seismic action;
- peak velocity ("Peak Velocity"),
- duration of the vibrational event.

Preferably, to calculate the peak acceleration, the following operations are carried out:

- a FIR filter is applied to a plurality of data detected by at least one accelerometer respectively along the X axis or along the Y axis or along the Z axis,
- the absolute value of the filter output is calculated and compared with a previously stored value PA and, preferably, initialized to zero,
- if the absolute value thus calculated is greater than the previously stored value PA, then the previously stored value is updated using/setting the absolute value thus calculated, otherwise the previously stored value is kept.

Preferably, the above operations are carried out cyclically at least twice by applying the FIR filter on a different plurality of data. Preferably, the above operations are carried out cyclically until a condition 209 of end vibrational event is identified.

Conveniently, a plurality of data is used which is equal to the order of the FIR filter.

Preferably, to calculate the peak speed, the following operations are carried out:

- a first FIR filter is applied to a plurality of data detected by at least one accelerometer respectively along the X axis or along the Y axis or along the Z axis,
- a plurality of speed data are calculated where each speed data is obtained by integrating, preferably by the Simpson method, at least three output data from the first FIR filter,
- a second FIR filter is applied to a plurality of speed data calculated in this way,
- calculate the absolute value of the filter output and compare it with a previous stored value PV and, preferably, initialized to zero,
- if the absolute value thus calculated is greater than the previously stored value PV, then the previously stored value PV is updated using/setting the absolute value thus calculated, otherwise the previously stored value is kept.

Preferably, each speed data is calculated whenever there are at least two new/additional data output from the first FIR filter.

Preferably, the above operations are carried out cyclically for at least twice by applying the second FIR filter on a different plurality of data. Preferably, the above operations are carried out cyclically until a condition 209 of end of the vibrational event is identified.

Conveniently, a plurality of data is used which is equal to the order of the second FIR filter.

Preferably, to calculate the duration of the vibrational event, the following operations are carried out:

- the standard deviation is continuously determined on a movable window comprising a predefined number of data (for example 50) detected by at least one accelerometer respectively along three axes X, Y and Z perpendicular to each other,
- the standard deviation thus determined is compared with a predefined threshold ThD (for example of 10.5 mg), preferably defined on the basis of the instrumental value, (for example equal to three times the value of the instrumental noise); in particular, if the standard deviation thus determined is lower than said predefined threshold ThD, a corresponding counter is incremented, otherwise the counter is reset to zero,
- when this counter reaches a predefined number (for example equal to 500, and this means that for 500 consecutive data - that is for 5s - the standard deviation on all axes is less than three times the noise of the instrument) the condition 209 of the end of the vibrational event is checked (and the accelerometer 102 returns to the first operating mode),
- the duration of the vibrational event is determined as the time in which the accelerometer 102 remained in the second operating mode minus the time interval Tc3 (for example of 5 seconds) used to verify the condition 209 of the end of the vibrational event.

Conveniently, the processing unit 101 of the device 50 or of the apparatus 1 is configured to implement a procedure for calculating parameters relating to the vibrational event caused by the seismic phenomenon, as described above in its essential and/or preferential aspects. Conveniently, in the processing unit 101 of the device 50 or apparatus 1 a software module is loaded and executed which is configured to implement a procedure for calculating parameters relating to the vibrational event caused by the seismic phenomenon, as described above in its essential and/or preferential aspects.

_Mode of operation of a device or apparatus according to the methods and procedures of the invention_

Conveniently, the processing unit 101 of the device 50 or apparatus 1 is configured to implement at least one of - preferably all of the following methods and procedures, and in particular:

- method 206 for the identification/recognition of a dangerous/risky vibrational event caused by a seismic phenomenon,
- procedure 201 for aligning an axis of the accelerometer with the gravitational axis of the earth,
- procedure 202 for determining accelerometer offsets,
- procedure 203 to determine the natural installation frequency of device 50 or apparatus 1,
- the method 207 of checking the modes of operation of the accelerometer 102,
- the procedure 208 for calculating parameters relating to the vibrational event.

Advantageously, one or more of the following procedures:

- procedure 201 for aligning an axis of the accelerometer with the gravitational axis of the earth,
- procedure 202 for determining accelerometer offsets,
- the procedure 203 to determine the natural frequency of installation of the device 50 or of the apparatus 1,

can be carried out at the time of installation and/or activation 200 of the device 50 or of the apparatus 1, or it can also be recalled after installation, in order to carry out a self-diagnosis of the current installation conditions and/or to carry out a self-calibration (in particular by means of procedure 202).

Conveniently, the procedures 201 and 202 can be carried out completely remotely, while the procedure 203 requires an interaction in order to apply the foreseen stresses, however, automatic instrumentation (mounted or associated with the device or apparatus) can be advantageously provided for the application of the stresses provided for in procedure 203.

Preferably, procedure 201 to align an axis of the accelerometer with the gravitational axis of the earth is carried out before procedure 202 to determine the accelerometer offsets and, in turn, the latter is carried out before procedure 203 to determine the natural installation frequency of device 50 or apparatus 1.

Conveniently, in a rest situation 204 in which there are no vibrational events or in any case, if present, they have intensities lower than the predefined threshold value Th9, the accelerometer 102 of the device 50 or of the apparatus 1 operates in said first mode of operation.

Then, when a situation arises with a vibrational event 205 of greater intensity than the predefined threshold value Th9, the accelerometer 102 of the device 50 or of the apparatus 1 begins to operate in said second mode. Following this, they begin to be implemented in parallel with each other:

- the method 206 to identify/recognize if the vibrational event 205 is dangerous/risky and is caused by a seismic phenomenon, and
- the method 207 for controlling the operating modes of the accelerometer 102.

Advantageously, in parallel with the methods 206 and 207, the procedure for calculating the parameters relating to the vibrational event 205 can also be implemented.

Conveniently, at the end 209 of the vibrational event 205, the accelerometer 102 returns to the first operating mode.

The present disclosure also relates to a computer program or a computer readable medium comprising instructions which, when the program is executed on a computer, leads the computer to carry out a method for verifying a vibrational event, preferably in order to consider/classify the vibrational event as dangerous/risky, as described above in its essential and/or preferential aspects.

The present disclosure also relates to a computer program or a computer readable medium comprising instructions which, when the program is executed on a computer, causes the computer to carry out a method for verifying the installation of a device or apparatus provided with at least one accelerometer, as described above in its essential and/or preferential aspects.

The present disclosure also relates to a computer program or a computer readable medium comprising instructions which, when the program is executed on a computer, causes the computer to execute a method for controlling the operating modes of an accelerometer, as described above. described in its essential and/or preferential aspects.

The present invention has been illustrated and described in some of its preferred embodiments, but it is understood that executive variations may be applied to them in practice, without however departing from the scope of the appended claims.

**Claims**

1. Method to verify if a vibrational event has a higher intensity than a predefined intensity threshold Th1, which is linked to a predefined frequency ThF, preferably in order to consider/classify the vibrational event as dangerous/risky, wherein in said method:

    - using at least one accelerometer (102), acceleration data are acquired along two axes, respectively X axis and Y axis, which are perpendicular to each other,
- the values of frequency F and intensity I of at least one portion of the signals, derived from the acceleration data thus acquired along the two axes X and Y, are determined when they exceed a threshold of predefined intensity Th2,
- on the basis of the frequency F thus determined, a predefined intensity threshold Th1 is identified,
- it is checked whether the intensity I thus determined is higher or lower than the predefined intensity threshold Th1 thus identified, to establish whether or not the vibrational event from which said signals were derived has an intensity greater than said threshold of predefined intensity Th1 thus identified, said method being **characterized in that** the values of frequency F and intensity I are determined, derived from the acceleration data acquired along the two axes X and Y, for each portion of the signal which exceeds said threshold of predefined intensity Th2 and the fact that the following operations are carried out:

    - for each frequency F thus determined, said predefined intensity threshold Th1 is identified,
    - for each intensity I thus determined, it is checked whether said intensity I is higher or lower than the predefined intensity threshold Th1 thus identified for each frequency F, in order to establish whether the vibrational event from which said signals were derived has a higher or lower intensity with respect to said threshold of predefined intensity Th1 thus identified,
    - for each intensity I thus determined, if said intensity I is higher than the predefined intensity threshold Th1 thus identified for each frequency F, the corresponding signals are processed so as to convert them into the frequency domain,
    - on the basis of the signals converted in the frequency domain it is determined whether the event, from which said signals are derived, is caused or not by a seismic phenomenon.

2. Method according to claim 1, **characterized in that**:

    - if the intensity I thus determined is higher than the predefined intensity threshold Th1 thus identified, the corresponding signals are processed so as to bring them into the frequency domain,
    - on the basis of the signals carried in the frequency domain it is determined whether the event, from which said signals are derived, is caused or not by a seismic phenomenon, preferably to command the execution of a corresponding corrective action or not.

3. Method according to one or more of the preceding claims, **characterized in that** the data detected by at least one accelerometer (102) along two axes Xa and Ya, perpendicular to each other, of the accelerometer reference system are processed so as to align them respectively along two axes X and Y which are perpendicular to each other and also perpendicular to the earth's gravitational axis G.

4. Method according to one or more of the preceding claims, **characterized in that** the values of frequency F and intensity I are determined, of at least one portion of the signals derived from the acceleration data thus acquired along the two axes X and Y, by means of a pseudo-frequency analysis which is configured to identify the frequency F and intensity I parameters of a sine wave which is associated with said at least one portion of signal which has exceeded said threshold of predetermined intensity Th2.

5. Method according to one or more of the preceding claims, **characterized in that**:

   - the frequency F is determined on the basis of a sinusoid Sin that passes through the time instants $t_1$ and $t_2$ in which a portion of the signal Sx or Sy, respectively along the X axis or along the Y axis, has crossed said threshold of predefined intensity Th2 and which has an amplitude corresponding to the maximum intensity IMx or IMy that said portion of signal Sx or Sy has within the time interval DTx or DTy defined between the time instants $t_1$ and $t_2$,
   - the intensity value I is determined on the basis of the intensity of the instantaneous modulus M of the acceleration data along the X and Y axes which is maximum within each period DTx or DTy defined between the time instants $t_1$ and $t_2$.

6. Method according to the preceding claim, **characterized in that**:

   - the time instants $t_{1x-0}$ and $t_{2x-0}$ in which the sinusoid Sin has an intensity equal to zero,
   - the frequency F of the sinusoid Sin is identified by calculating the inverse of the double of the time interval defined between the time instants $t_{1x-0}$ and $t_{2x-0}$.

7. Method according to one or more of the preceding claims, **characterized in that** the following steps are carried out to determine the intensity I:

   - the instantaneous modulus M is calculated using the data acquired along the X axis and the data acquired along the Y axis;
   - I is determined as the maximum value INTx of the instantaneous modulus M thus calculated within each time interval in which the signal derived from the acquired data along X or along Y has exceeded the predetermined threshold Th2.

8. Method according to one or more of the preceding claims, **characterized in that** it is converting into the frequency domain a predefined number of data acquired along X and Y in the neighbourhood of the portion of the signal which is **characterized by** F which corresponds to or is near to ThF and from I which is greater than the predetermined threshold Th1 linked to the predefined frequency ThF.

9. Method according to one or more of the preceding claims, **characterized in that** the corresponding signals are processed so as to convert them into the frequency domain using a time-frequency transform, preferably the discrete Fourier transform (DFT), and even more preferably the fast Fourier transform (FFT).

10. Method according to one or more of the preceding claims, **characterized in that**:

    - the signals carried in the frequency domain are processed by calculating the cumulative frequencies in at least two predefined frequency intervals,
    - on the basis of the cumulative frequencies thus calculated, a characteristic coefficient CC is then determined for each predefined frequency interval used for the calculation of the cumulative frequencies,
    - said at least one characteristic coefficient CC thus determined is compared with at least one threshold value Th3, to determine whether the event, from which said signals carried in the frequency domain are derived, is caused or not by a seismic phenomenon.

11. Method according to one or more of the preceding claims, **characterized in that** to determine whether or not a vibrational event is caused by a seismic phenomenon, at least one parameter is used, obtained by applying at least one digital filter, preferably IIR, on the data acquired and detected by at least one accelerometer (102) along said two axes X and Y which are mutually perpendicular.

12. Method according to one or more of the preceding claims, **characterized in that** on the data acquired and detected by said at least one accelerometer

(102) along the two axes X and Y, which are perpendicular to each other, is applied a first digital filter, preferably IIR, of the high pass type and a second digital filter, preferably IIR, of the low pass type.

13. Method according to claims 11 or 12, **characterized in that** on the basis of the outputs of said at least one digital filter at least one coefficient CD is calculated to be compared with a predefined threshold value Th4, preferably said at least one coefficient CD is calculated only when a vibrational event is identified that has intensity I higher than said predefined threshold Th1.

14. Method according to claim 13, **characterized in that**:

- if the characteristic coefficient CD calculated on the basis of the filter outputs is lower (or higher) than the predefined threshold value Th4, then it is immediately confirmed that the vibrational event is caused by a seismic phenomenon,
- if the characteristic coefficient CD calculated on the basis of the filter outputs is higher (or lower) than the predefined threshold value Th4, then one proceeds by considering the signals that are associated with said event and that are brought into the frequency domain and, preferably, to determining whether or not this event is caused by a seismic phenomenon is carried out by comparing the characteristic coefficient CC calculated on the basis of the signals carried in the frequency domain with the threshold Th3.

15. Method according to one or more of the preceding claims, **characterized in that** said at least one accelerometer (102) is configured to operate in at least two modes:

- a first mode in which the data are acquired at a first sampling frequency, and
- a second mode in which the data are acquired at a second sampling frequency, which is higher than said first sampling frequency,

and by the fact that, when said accelerometer operates in said second mode, said phase is carried out in which the values of frequency F and intensity I of at least one portion of the signals, derived from the acceleration data thus acquired along the two axes X and Y, when they exceed a predefined intensity threshold Th2.

**Patentansprüche**

1. Verfahren zum Überprüfen, ob ein Schwingungsereignis eine höhere Intensität als eine vordefinierte Intensitätsschwelle Th1 aufweist, die mit einer vordefinierten Frequenz ThF verknüpft ist, vorzugsweise um das Schwingungsereignis als gefährlich/riskant zu betrachten/einzustufen, wobei bei dem Verfahren

- unter Nutzung von mindestens einem Beschleunigungsmesser (102) Beschleunigungsdaten entlang zweier Achsen, jeweils der X-Achse bzw. der Y-Achse, die senkrecht zueinander stehen, erfasst werden;
- die Werte der Frequenz F und der Intensität I von mindestens einem Abschnitt der von den so entlang der beiden Achsen X und Y erfassten Beschleunigungsdaten abgeleiteten Signale bestimmt werden, wenn sie eine vordefinierte Intensitätsschwelle Th2 überschreiten;
- eine vordefinierte Intensitätsschwelle Th1 auf der Grundlage der so bestimmten Frequenz F identifiziert wird;
- geprüft wird, ob die so bestimmte Intensität I höher oder niedriger als die so identifizierte vordefinierte Intensitätsschwelle Th1 ist, um festzustellen, ob das Schwingungsereignis, von dem die Signale abgeleitet wurden, eine Intensität aufweist, die größer als die so identifizierte vordefinierte Intensitätsschwelle Th1 ist oder nicht,

wobei das Verfahren **dadurch gekennzeichnet ist, dass** die Werte der Frequenz F und der Intensität I abgeleitet von den entlang der beiden Achsen X und Y erfassten Beschleunigungsdaten für jeden Abschnitt des Signals bestimmt werden, der die vordefinierte Intensitätsschwelle Th2 überschreitet, und dadurch, dass die folgenden Vorgänge durchgeführt werden:

- für jede so bestimmte Frequenz F wird die vordefinierte Intensitätsschwelle Th1 identifiziert;
- für jede so bestimmte Intensität I wird geprüft, ob diese Intensität I höher oder niedriger ist als die so für jede Frequenz F identifizierte vordefinierte Intensitätsschwelle Th1, um festzustellen, ob das Schwingungsereignis, von dem die Signale abgeleitet wurden, eine höhere oder niedrigere Intensität in Bezug auf die so identifizierte vordefinierte Intensitätsschwelle Th1 aufweist;
- wenn die Intensität I höher ist als die so für jede Frequenz F identifizierte vordefinierte Intensitätsschwelle Th1, werden für jede so bestimmte Intensität I die entsprechenden Signale so verarbeitet, dass sie in den Frequenzbereich umgewandelt werden;
- auf der Grundlage der im Frequenzbereich umgewandelten Signale wird bestimmt, ob das Ereignis, von dem diese Signale abgeleitet sind, durch ein seismisches Phänomen verursacht ist oder nicht.

2. Verfahren nach Anspruch 1, **dadurch gekennzeichnet, dass**:

    - die entsprechenden Signale, wenn die so bestimmte Intensität I höher als die so identifizierte vordefinierte Intensitätsschwelle Th1 ist, so verarbeitet werden, dass sie in den Frequenzbereich gebracht werden;
    - auf der Grundlage der in den Frequenzbereich überführten Signale bestimmt wird, ob das Ereignis, von dem diese Signale abgeleitet sind, durch ein seismisches Phänomen verursacht ist oder nicht, vorzugsweise um die Durchführung einer entsprechenden Korrekturmaßnahme anzuordnen oder nicht.

3. Verfahren nach einem oder mehreren der vorhergehenden Ansprüche, **dadurch gekennzeichnet, dass** die von mindestens einem Beschleunigungsmesser (102) entlang zweier zueinander senkrecht stehender Achsen Xa und Ya des Beschleunigungsmesser-Bezugssystems detektierten Daten so verarbeitet werden, dass sie jeweils entlang zweier zueinander senkrecht stehender Achsen X und Y sowie senkrecht zur Erdanziehungsachse G ausgerichtet werden.

4. Verfahren nach einem oder mehreren der vorhergehenden Ansprüche, **dadurch gekennzeichnet, dass** die Werte der Frequenz F und der Intensität I von mindestens einem Abschnitt der aus den entlang der beiden Achsen X und Y erfassten Beschleunigungsdaten abgeleiteten Signale mittels einer Pseudofrequenzanalyse bestimmt werden, die ausgelegt ist, um die Parameter der Frequenz F und der Intensität I einer Sinuswelle zu identifizieren, die mit dem mindestens einen Signalabschnitt assoziiert ist, der die vorbestimmte Intensitätsschwelle Th2 überschritten hat.

5. Verfahren nach einem oder mehreren der vorhergehenden Ansprüche, **dadurch gekennzeichnet, dass**:

    - die Frequenz F auf der Grundlage einer Sinuskurve Sin bestimmt wird, die die Zeitpunkte t1 und t2 durchläuft, in denen ein Abschnitt des Signals Sx oder Sy jeweils entlang der X-Achse oder entlang der Y-Achse die vordefinierte Intensitätsschwelle Th2 gekreuzt hat, und die eine Amplitude entsprechend der maximalen Intensität IMx oder IMy aufweist, die der Signalabschnitt Sx oder Sy innerhalb des zwischen den Zeitpunkten t1 und t2 definierten Zeitintervalls DTx oder DTy aufweist;
    - der Intensitätswert I auf der Grundlage der Intensität des Momentanmoduls M der Beschleunigungsdaten entlang der X- und Y-Achse, die innerhalb jeder zwischen den Zeitpunkten t1 und t2 definierten Periode DTx oder DTy maximal ist, bestimmt wird.

6. Verfahren nach dem vorhergehenden Anspruch, **dadurch gekennzeichnet, dass**:

    - die Zeitpunkte $t_{1x-0}$ und $t_{2x-0}$, in denen die Sinuskurve Sin eine Intensität gleich null aufweist,
    - die Frequenz F der Sinuskurve Sin durch Berechnen des Kehrwerts des Doppelten des zwischen den Zeitpunkten $t_{1x-0}$ und $t_{2x-0}$ definierten Zeitintervalls identifiziert wird.

7. Verfahren nach einem oder mehreren der vorhergehenden Ansprüche, **dadurch gekennzeichnet, dass** die folgenden Schritte durchgeführt werden, um die Intensität I zu bestimmen:

    - der Momentanmodul M wird unter Nutzung der entlang der X-Achse erfassten Daten und der entlang der Y-Achse erfassten Daten berechnet;
    - I wird als Höchstwert INTx des so berechneten Momentanmoduls M innerhalb jedes Zeitintervalls bestimmt, in dem das von den entlang X oder entlang Y erfassten Daten abgeleitete Signal die vorbestimmte Schwelle Th2 überschritten hat.

8. Verfahren nach einem oder mehreren der vorhergehenden Ansprüche, **dadurch gekennzeichnet, dass** es eine vordefinierte Anzahl an entlang X und Y in der Nähe des Abschnitts des Signals, der durch einen Wert F gekennzeichnet ist, der ThF entspricht oder nahe daran liegt, und einen Wert I, der größer als die mit der vordefinierten Frequenz ThF verknüpfte Schwelle Th1 ist, erfassten Daten in den Frequenzbereich umwandelt.

9. Verfahren nach einem oder mehreren der vorhergehenden Ansprüche, **dadurch gekennzeichnet, dass** die entsprechenden Signale so verarbeitet werden, dass sie unter Nutzung einer Zeit-Frequenz-Transformation, vorzugsweise der diskreten Fourier-Transformation (OFT) und insbesondere vorzugsweise der schnellen Fourier-Transformation (FFT) in den Frequenzbereich umgewandelt werden.

10. Verfahren nach einem oder mehreren der vorhergehenden Ansprüche, **dadurch gekennzeichnet, dass**:

- die in den Frequenzbereich überführten Signale durch Berechnen der kumulierten Frequenzen in mindestens zwei vordefinierten Frequenzintervallen verarbeitet werden;
- anschließend ein charakteristischer Koeffizient CC auf der Grundlage der so berechneten kumulativen Frequenzen für jedes vordefinierte, zur Berechnung der kumulativen Frequenzen herangezogene Frequenzintervall bestimmt wird;
- der so bestimmte mindestens eine charakteristische Koeffizient CC mit mindestens einem Schwellenwert Th3 verglichen wird, um zu bestimmen, ob das Ereignis, von dem die in den Frequenzbereich überführten Signale abgeleitet sind, durch ein seismisches Phänomen verursacht ist oder nicht.

11. Verfahren nach einem oder mehreren der vorhergehenden Ansprüche, **dadurch gekennzeichnet, dass** zum Bestimmen, ob ein Schwingungsereignis durch ein seismisches Phänomen verursacht ist oder nicht, mindestens ein durch Anwenden von mindestens einem digitalen Filter, vorzugsweise IIR, auf die erfassten und von mindestens einem Beschleunigungsmesser (102) entlang der beiden Achsen X und Y, die zueinander senkrecht stehen, detektierten Daten erhaltener Parameter herangezogen wird.

12. Verfahren nach einem oder mehreren der hervorgehenden Ansprüche, **dadurch gekennzeichnet, dass** auf die erfassten und von dem mindestens einen Beschleunigungsmesser (102) entlang der beiden Achsen X und Y, die senkrecht zueinander stehen, detektierten Daten ein erster digitaler Filter, vorzugsweise IIR, vom Hochpass-Typ und ein zweiter digitaler Filter, vorzugsweise IIR, vom Tiefpass-Typ angewendet wird.

13. Verfahren nach den Ansprüchen 11 oder 12, **dadurch gekennzeichnet, dass** auf der Grundlage der Ausgabewerte des mindestens einen digitalen Filters mindestens ein Koeffizient CD berechnet wird, um mit einem vordefinierten Schwellenwert Th4 verglichen zu werden, wobei der mindestens eine Koeffizient CD vorzugsweise nur dann berechnet wird, wenn ein Schwingungsereignis identifiziert wird, das eine Intensität I aufweist, die höher ist als die vordefinierte Schwelle Th1.

14. Verfahren nach Anspruch 13, **dadurch gekennzeichnet, dass**:

- wenn der auf der Grundlage der Filter-Ausgabewerte berechnete Koeffizient CD geringer (oder höher) als der vordefinierte Schwellenwert Th4 ist, sofort bestätigt wird, dass das Schwingungsereignis durch ein seismisches Phänomen hervorgerufen ist;
- wenn der auf der Grundlage der Filter-Ausgabewerte berechnete charakteristische Koeffizient CD höher (oder geringer) als der vordefinierte Schwellenwert Th4 ist, die Signale berücksichtigt werden, die mit diesem Ereignis assoziiert sind und die in den Frequenzbereich gebracht werden, wobei zum Bestimmen, ob das Ereignis durch ein seismisches Phänomen verursacht ist oder nicht, vorzugsweise ein Vergleich des auf der Grundlage der in den Frequenzbereich überführten Signale berechneten charakteristischen Koeffizienten CC mit der Schwelle Th3 durchgeführt wird.

15. Verfahren nach einem oder mehreren der vorhergehenden Ansprüche, **dadurch gekennzeichnet, dass** der mindestens eine Beschleunigungsmesser (102) ausgelegt ist, um in mindestens zwei Betriebsarten zu arbeiten:

- einer ersten Betriebsart, in der die Daten bei einer ersten Abtastfrequenz erfasst werden, und
- einer zweiten Betriebsart, in der die Daten bei einer zweiten Abtastfrequenz erfasst werden, die höher ist als die erste Abtastfrequenz,

und dadurch, dass, wenn der Beschleunigungsmesser in der zweiten Betriebsart arbeitet, die Phase durchgeführt wird, in der die Werte der Frequenz F und der Intensität I mindestens eines Abschnitts der von den entlang der beiden Achsen X und Y so erfassten Beschleunigungsdaten abgeleiteten Signale, wenn sie eine vordefinierte Intensitätsschwelle Th2 überschreiten.

**Revendications**

1. Procédé pour vérifier si un événement vibratoire a une intensité supérieure à un seuil d'intensité prédéfini Th1, qui est lié à une fréquence prédéfinie ThF, de préférence afin de considérer/classer l'événement vibratoire comme dangereux/risqué, dans lequel dans ledit procédé :

- à l'aide d'au moins un accéléromètre (102), les données d'accélération sont acquises le long de deux axes, respectivement l'axe X et l'axe Y, qui sont perpendiculaires l'un à l'autre,
- les valeurs de fréquence F et d'intensité I d'au moins une partie des signaux, dérivées des données d'accélération ainsi acquises le long des deux axes X et Y, sont déterminées lorsqu'elles dépassent un seuil d'intensité prédéfini Th2,

- sur la base de la fréquence F ainsi déterminée, un seuil d'intensité prédéfini Th1 est identifié,
- on vérifie si l'intensité I ainsi déterminée est supérieure ou inférieure au seuil d'intensité prédéfini Th1 ainsi identifié, pour établir si l'événement vibratoire dont sont issus lesdits signaux a une intensité supérieure audit seuil d'intensité prédéfini Th1 ainsi identifié,

ledit procédé étant **caractérisé par** la détermination des valeurs de fréquence F et d'intensité I, dérivées des données d'accélération acquises le long des deux axes x et Y, pour chaque partie du signal qui dépasse ledit seuil d'intensité prédéfini Th2 et en ce que les opérations suivantes sont effectuées :

- pour chaque fréquence F ainsi déterminée, ledit seuil d'intensité prédéfini Th1 est identifié,
- pour chaque intensité I ainsi déterminée, on vérifie si ladite intensité I est supérieure ou inférieure au seuil d'intensité prédéfini Th1 ainsi identifié pour chaque fréquence F, afin d'établir si l'événement vibratoire dont sont issus lesdits signaux a une intensité supérieure ou inférieure par rapport audit seuil d'intensité prédéfini Th1 ainsi identifié,
- pour chaque intensité I ainsi déterminée, si ladite intensité I est supérieure au seuil d'intensité prédéfini Th1 ainsi identifié pour chaque fréquence F, les signaux correspondants sont traités de manière à les convertir dans le domaine fréquentiel,
- sur la base des signaux convertis dans le domaine fréquentiel, il est déterminé si l'événement, dont lesdits signaux sont dérivés, est causé ou non par un phénomène sismique.

2. Procédé selon la revendication 1, **caractérisé en ce que** :

    - si l'intensité I ainsi déterminée est supérieure au seuil d'intensité prédéfini Th1 ainsi identifié, les signaux correspondants sont traités de manière à les amener dans le domaine fréquentiel,
    - sur la base des signaux transportés dans le domaine fréquentiel, il est déterminé si l'événement, dont lesdits signaux sont dérivés, est causé ou non par un phénomène sismique, de préférence pour commander l'exécution d'une action corrective correspondante ou non.

3. Procédé selon l'une ou plusieurs des revendications précédentes, **caractérisé en ce que** les données détectées par au moins un accéléromètre (102) selon deux axes Xa et Ya, perpendiculaires entre eux, du système de référence de l'accéléromètre sont traitées de manière à les aligner respectivement selon deux axes X et Y perpendiculaires entre eux et également perpendiculaires à l'axe de gravitation terrestre G.

4. Procédé selon l'une ou plusieurs des revendications précédentes, **caractérisé en ce que** les valeurs de fréquence F et d'intensité I sont déterminées, d'au moins une partie des signaux issus des données d'accélération ainsi acquises selon les deux axes X et Y, au moyen d'une analyse pseudo-fréquentielle configurée pour identifier les paramètres de fréquence F et d'intensité I d'une onde sinusoïdale qui est associée à ladite au moins une partie de signal ayant dépassé ledit seuil d'intensité prédéterminé Th2.

5. Procédé selon l'une ou plusieurs des revendications précédentes, **caractérisé en ce que** :

    - la fréquence F est déterminée sur la base d'une sinusoïde Sin qui passe par les instants t1 et dans laquelle une partie du signal Sx ou Sy, respectivement selon l'axe X ou selon l'axe Y, a franchi ledit seuil d'intensité prédéfini Th2 et qui a une amplitude correspondant à l'intensité maximale IMx ou IMy que ladite partie du signal Sx ou Sy a dans l'intervalle de temps DTx ou DTy défini entre les instants t1 et t2,
    - la valeur d'intensité I est déterminée sur la base de l'intensité du module instantané M des données d'accélération le long des axes X et Y qui est maximale dans chaque période DTx ou DTy définie entre les instants t1 et b.

6. Procédé selon la revendication précédente, **caractérisé en ce que** :

    - les instants $t_{1x\text{-}0}$ et $t_{2x\text{-}0}$ où la sinusoïde Sin a une intensité égale à zéro,
    - la fréquence F de la sinusoïde Sin est identifiée en calculant l'inverse du double de l'intervalle de temps défini entre les instants $t_{1x\text{-}0}$ et $t_{2x\text{-}0}$.

7. Procédé selon l'une ou plusieurs des revendications précédentes, **caractérisé en ce que** les étapes suivantes sont effectuées pour déterminer l'intensité I :

    - le module instantané M est calculé à partir des données acquises le long de l'axe X et des données acquises le long de l'axe Y ;
    - I est déterminée comme la valeur maximale INTx du module instantané M ainsi calculé dans chaque intervalle de temps au cours duquel le signal dérivé des données acquises le long de X ou de Y a dépassé le seuil prédéterminé Th2.

8. Procédé selon l'une ou plusieurs des revendications précédentes, **caractérisé en ce qu'**il s'agit de convertir dans le domaine fréquentiel un nombre prédéfini de données acquises le long de X et Y au voisinage de la partie du signal qui est **caractérisée par** F qui correspond à ou est proche de ThF et de I qui est supérieur au seuil prédéterminé Th1 lié à la fréquence prédéfinie ThF.

9. Procédé selon l'une ou plusieurs des revendications précédentes, **caractérisé en ce que** les signaux correspondants sont traités de manière à les convertir dans le domaine fréquentiel à l'aide d'une transformée temps-fréquence, de préférence la transformée de Fourier discrète (OFT), et plus préférentiellement encore la transformée de Fourier rapide (FFT).

10. Procédé selon l'une ou plusieurs des revendications précédentes, **caractérisé en ce que** :

    - les signaux transportés dans le domaine fréquentiel sont traités en calculant les fréquences cumulées dans au moins deux intervalles de fréquence prédéfinis,
    - sur la base des fréquences cumulées ainsi calculées, un coefficient caractéristique CC est ensuite déterminé pour chaque intervalle de fréquence prédéfini utilisé pour le calcul des fréquences cumulées,
    - ledit au moins un coefficient caractéristique CC ainsi déterminé est comparé à au moins une valeur seuil Th3, afin de déterminer si l'événement, dont sont dérivés lesdits signaux transportés dans le domaine fréquentiel, est causé ou non par un phénomène sismique.

11. Procédé selon l'une ou plusieurs des revendications précédentes, **caractérisé en ce que** pour déterminer si un événement vibratoire est causé ou non par un phénomène sismique, on utilise au moins un paramètre obtenu en appliquant au moins un filtre numérique, de préférence IIR, sur les données acquises et détectées par au moins un accéléromètre (102) le long desdits deux axes X et Y qui sont mutuellement perpendiculaires.

12. Procédé selon l'une ou plusieurs des revendications précédentes, **caractérisé en ce que** sur les données acquises et détectées par ledit au moins un accéléromètre (102) le long des deux axes X et Y, qui sont perpendiculaires l'un à l'autre, est appliqué un premier filtre numérique, de préférence IIR, du type passe-haut et un second filtre numérique, de préférence IIR, du type passe-bas.

13. Procédé selon les revendications 11 ou 12, **caractérisé en ce que** sur la base des sorties dudit au moins un filtre numérique, au moins un coefficient CD est calculé pour être comparé à une valeur seuil prédéfinie Th4, de préférence ledit au moins un coefficient CD n'est calculé que lorsqu'un événement vibratoire dont l'intensité I est supérieure audit seuil prédéfini Th1 est identifié.

14. Procédé selon la revendication 13, **caractérisé en ce que** :

    - si le coefficient caractéristique CD calculé sur la base des sorties de filtre est inférieur (ou supérieur) à la valeur seuil prédéfinie Th4, il est immédiatement confirmé que l'événement vibratoire est causé par un phénomène sismique,
    - si le coefficient caractéristique CD calculé sur la base des sorties de filtre est supérieur (ou inférieur) à la valeur seuil prédéfinie Th4, on procède alors à l'examen des signaux qui sont associés audit événement et qui sont portés dans le domaine fréquentiel et, de préférence, la détermination du fait que cet événement est causé ou non par un phénomène sismique s'effectue en comparant le coefficient caractéristique CC calculé sur la base des signaux portés dans le domaine fréquentiel avec le seuil Th3.

15. Procédé selon l'une ou plusieurs des revendications précédentes, **caractérisé en ce que** ledit au moins un accéléromètre (102) est configuré pour fonctionner selon au moins deux modes :

    - un premier mode dans lequel les données sont acquises à une première fréquence d'échantillonnage, et
    - un second mode dans lequel les données sont acquises à une seconde fréquence d'échantillonnage, qui est supérieure à ladite première fréquence d'échantillonnage,

    et **en ce que**, lorsque ledit accéléromètre fonctionne dans ledit second mode, ladite phase est réalisée dans laquelle les valeurs de fréquence F et d'intensité I d'au moins une partie des signaux, issus des données d'accélération ainsi acquises le long des deux axes X et Y, lorsqu'elles dépassent un seuil d'intensité prédéfini Th2.

FIG. 1

FIG. 2

FIG. 3

FIG. 4

FIG. 5

FIG. 6

FIG. 7

FIG. 8A

FIG. 8B

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6661346 B
- JP 2000162032 B
- US 2015219777 A
- JP 2020091167 B
- JP 2009175130 B
- US 2021141107 A
- US 2010042328 A